(19) Europäisches Patentamt
European Patent Office
Office européen des brevets

(11) **EP 4 517 569 B1**

(12) **EUROPEAN PATENT SPECIFICATION**

(45) Date of publication and mention
of the grant of the patent:
**11.03.2026 Bulletin 2026/11**

(21) Application number: **23211719.2**

(22) Date of filing: **23.11.2023**

(51) International Patent Classification (IPC):
**G06F 21/56** *(2013.01)* **G06F 21/79** *(2013.01)*
**G06F 12/02** *(2006.01)*

(52) Cooperative Patent Classification (CPC):
**G06F 21/567; G06F 12/0246; G06F 21/56;**
**G06F 21/568; G06F 21/79;** G06F 2212/7201

(54) **DATA PROCESSING COMPONENT, SOLID-STATE STORAGE DEVICE, AND CORRESPONDING COMPUTER-IMPLEMENTED METHOD**

DATENVERARBEITUNGSKOMPONENTE, FESTKÖRPERSPEICHERVORRICHTUNG UND ZUGEHÖRIGES COMPUTERIMPLEMENTIERTES VERFAHREN

COMPOSANT DE TRAITEMENT DE DONNÉES, DISPOSITIF DE STOCKAGE À SEMI-CONDUCTEURS ET PROCÉDÉ MIS EN OEUVRE PAR ORDINATEUR CORRESPONDANT

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **30.08.2023 EP 23194348**

(43) Date of publication of application:
**05.03.2025 Bulletin 2025/10**

(73) Proprietor: **Nagravision Sàrl**
**1033 Cheseaux-sur-Lausanne (CH)**

(72) Inventor: **GAGLIARDONI, Tommaso**
**1033 Cheseaux-sur-Lausanne (CH)**

(74) Representative: **Parker, Andrew James**
**Meissner Bolte Partnerschaft mbB**
**Patentanwälte Rechtsanwälte**
**Postfach 86 06 24**
**81633 München (DE)**

(56) References cited:
**US-A1- 2018 189 508     US-A1- 2021 157 524**

- **HUANG JIAN JIAN HUANG@GATECH EDU ET AL: "FlashGuard Leveraging Intrinsic Flash Properties to Defend Against Encryption Ransomware", PROCEEDINGS OF THE 18TH ACM/IFIP/USENIX MIDDLEWARE CONFERENCE, ACMPUB27, NEW YORK, NY, USA, 30 October 2017 (2017-10-30), pages 2231 - 2244, XP058697920, ISBN: 978-1-4503-5525-4, DOI: 10.1145/3133956.3134035**

**Description**

TECHNICAL FIELD OF THE INVENTION

The present invention relates to a data processing component for controlling storage of data to a solid-state storage device comprising a plurality of physical storage blocks. A corresponding solid-state storage device and computer-implemented method are also provided

BACKGROUND TO THE INVENTION

In the realm of digital security, ransomware has become an increasingly prevalent and dangerous threat. This type of malicious software is particularly hazardous as attackers often target high-value assets, where the cost of losing data is substantial. Understanding the mechanics of ransomware attacks and developing effective defences against them is crucial in today's technology-driven world.

Ransomware operates by using cryptography to encrypt data on a victim's disk. Through high-throughput encryption schemes, typically employing stream ciphers, the data is overwritten at such a rapid pace that users have little time to detect and mitigate the attack. This swift process makes it challenging for users to protect their valuable information and recover from the attack.

Modern solid-state storage devices (SSSDs) incorporate a feature called TRIM, which is designed to enhance performance and prolong the life of the SSD by preventing immediate overwriting of erased data. However, this feature does not offer a foolproof solution to ransomware attacks. In practice, the recovery of erased data is often impossible, as unused sectors containing residual data are rapidly reclaimed and overwritten with new data. Consequently, this process thwarts attempts to recover data encrypted by ransomware by examining recently erased sectors.

To defend against ransomware, an ideal solution would involve deploying write-once filesystems, which preserve deleted data for a certain period. This approach could allow users to recover their information even after a ransomware attack. Unfortunately, the most common method of achieving this is through tape backup, which is notoriously expensive, slow, and inflexible.

There is an urgent need for a fast, cost-effective, and adaptable ransomware-resistant storage medium. Such a solution would not only minimize the impact of ransomware attacks on businesses and individuals but also serve as a deterrent for potential attackers.

US 2021/157524 A1 teaches methods for protecting a memory system, such as an SSD, from ransomware or other malware. When the controller of the memory system receives a write command from the host specifying a target logical address mapped to a first physical address, the map data are updated so that the logical address is mapped to a second physical address. The erase operation on the data is suspended, and the original map data is backed up. This allows the original data to be restored if a malware attack is subsequently detected.

HUANG JIAN JIAN HUANG@GATECH EDU ET AL: "FlashGuard Leveraging Intrinsic Flash Properties to Defend Against Encryption Ransomware",PROCEEDINGS OF THE 18TH ACM/IFIP/USENIX MIDDLEWARE CONFERENCE, ACMPUB27, NEW YORK, NY, USA, 30 October 2017 (2017-10-30), pages 2231-2244, DOI:          10.1145/3133956.3134035          ISBN: 978-1-4503-5525-4 discloses flash memory with a ransomware-aware flash translation layer mapping virtual addresses to physical addresses. The garbage collection algorithm is modified in a manner that allows data potentially overwritten by encryption ransomware to be retained so that it may subsequently be recovered.

US 2018/189508 A1 discloses a storage device, such as an SSD, that mitigates the effects of ransomware attacks. When the device receives an indication from the host that an application writing data is suspicious, the target logical addresses are checkpointed in a manner that allows the data stored in the corresponding physical addresses to be preserved.

SUMMARY OF THE INVENTION

Broadly speaking, the present invention addresses the drawbacks of the prior art in the provision of a data processing component for controlling storage of data to a solid-state storage device comprising a plurality of $N$ physical storage blocks. In order to reduce the risks associated with ransomware attacks, an operating system may be able only to access a plurality of M logical storage blocks each mapped to a respective physical storage block, where $M < N$, such that when a request to erase data or to overwrite data is received, the mapping between the physical storage blocks and logical storage blocks is updated. In this way, older data may be preserved on the solid-state storage device, which can be recovered in the event of a ransomware attack, or in other equivalent circumstances.

Accordingly, a first aspect of the present invention provides a data processing component for controlling storage of data to a solid-state storage device comprising a plurality of $N$ physical storage blocks, the data processing component comprising a controller and a memory, wherein: the memory stores a mapping between a plurality of M logical storage blocks accessible by an operating system of a computing device and a respective physical storage block of the plurality of N physical storage blocks; and the controller is configured, in response to receiving a request from the operating system to store incoming data in a first specified logical storage block which is mapped to a first physical storage block, to execute a method comprising: determining that the first specified logical storage block is unavailable for the storage of incoming data, and in response to determining that the first specified logical storage block is unavailable for the storage of incoming data: identifying a second physical storage block of the plurality of N physical storage blocks for storage of the incoming data. Identification of the second physical storage block of the plurality of N physical storage blocks may be based on a history value of the second physical storage block, the history value indicative of a most recent time at which that physical storage block was updated and/or a number of times that that physical storage block has been updated. The controller may be further configured to store the incoming data in the second physical storage block.

Each physical storage block may store the respective history value indicative of a most recent time at which that physical storage block was updated and/or the number of times that that physical storage block has been updated. In those cases, the identification of the second physical storage block may be based on the history value of the second physical storage block, for example based on a determination that the history value of the second physical storage block meets a predetermined criterion. This is discussed in more detail later in this patent application.

In addition to storing the incoming data in the second physical storage block, the controller may be further configured to update the mapping to associate the first specified logical storage block with the second physical storage block. This may take place before or after storage of the incoming data in the second physical storage block.

Furthermore, the controller may be further configured to update the history value of the second physical storage block, for example after the incoming data has been stored in the second physical storage block. Or, in those cases in which the controller is configured to update the mapping as outlined in the previous paragraph, the controlled may be configured to update the history value of the second physical storage block when the mapping is updated, for example at the same time as the mapping is updated, before (preferably immediately before) the mapping is updated, or after (preferably immediately after) the mapping is updated.

The invention is particularly applicable to solid-state storage devices, such as solid-state disks (SSDs), but is also suitable for use with any other storage devices which may be partitioned into physical blocks, such as conventional hard drives. The "computing device" may be any suitable computing device such as a desktop computer, a laptop computer, a smartphone, a tablet, or the like. The term "computing device" should be understood to refer to an external computing device, i.e. a computing device which is not part of the solid-state storage device or data processing component. The computing device may be a computing device of which the solid-state storage device is a component.

The distinction between physical storage blocks and logical storage blocks is important.

The term "physical storage block" is used to refer to an actual physical component of the storage device which is configured to store a given amount of data. For example, physical storage blocks may correspond to regions of flash memory within the solid-state storage device, dynamic random-access memory (DRAM) cells, or other suitable technology which is used to implement the physical storage of data within a solid-state or other storage device. Each physical storage block may have the same capacity, which may be, for example be $2^X$ kibibytes (KiB), where X may be no fewer than 7, no fewer than 8, no fewer than 9, no fewer than 10, or no fewer than 11. Alternatively, each physical storage block may have a capacity of $10^Y$ bytes, where Y may be no fewer than 2, no fewer than 3, no fewer than 4, or no fewer than 5.

The solid-state storage device may comprise no fewer than 100,000 physical storage blocks, no fewer than 1,000,000 physical storage blocks, no fewer than 2,000,000 physical storage blocks, no fewer than 5,000,000 physical storage blocks, no fewer than 10,000,000 physical storage blocks, no fewer than 100,000,000 blocks, or no fewer than 1,000,000,000 blocks.

Each physical storage block may have an associated address defining its location within the solid-state storage device. Each physical storage block may have an associated index or identifier. The index or identifier may be in the form of an integer, and may be less complex than the corresponding address of the physical storage block.

Herein, a "logical storage block" comprises an index or an identifier which corresponds to a physical storage block of the plurality of N physical storage blocks. Logical storage blocks may also sometimes be referred to as "virtual storage blocks". A logical storage block is not an actual storage block which can be used to store data, but is rather a reference to a physical storage block of the storage device which can be used to store data. Each logical storage block may have the same capacity, which may be the same as the capacity of each of the physical storage blocks. According to the mapping, there may be one physical storage block mapped to each logical storage block. The mapping may be stored in the form of a table or plurality of associations between logical storage blocks and physical storage blocks. To improve security, the number of logical storage blocks M is less than the number of physical storage blocks N, i.e. M < N, i.e. that there are more physical storage blocks than logical storage blocks. In this way, only a portion of the physical storage blocks may be associated with a logical storage block at a given time. However, the invention may still be implemented when the number of physical storage blocks is the same as the number of logical storage blocks, i.e. when M is equal to N, or where there is a one-to-one mapping between the physical storage blocks and the logical storage blocks. In these cases, there may be no need to update the mapping, because there exists a one-to-one mapping between logical storage blocks and physical storage blocks, or a mapping determined at the formatting of the device, which may, for example, take into account damaged physical blocks.

Implementations in which M = N may be useful when only a fraction of the physical storage blocks (and equivalently, the logical storage blocks) are in use, which is generally the case given the large capacities of modern storage devices.

The logical storage blocks are accessible to the operating system, i.e. when the operating system is required to store data on the storage device, it is able only to "see" the logical storage blocks, and to select a storage location from among the logical storage blocks. In this manner, the data processing component of the first aspect of the present invention acts as an intermediary component between the operating system and the solid-state storage device itself. Only the logical storage blocks may be accessible to the operating system, i.e. the physical storage blocks may be inaccessible to the operating system. Alternatively put, the data processing component may be configured to prevent direct access to the plurality of physical storage blocks by an operating system of a computing device, such that the operating system of the computing device is able only to access a solid-state storage device of size M blocks. By preventing access by the operating system to the physical storage blocks, an additional layer of security between the operating system and the storage device is provided, because the ransomware infects the operating system.

The operating system may access the solid-state storage device through an I/O interface provided by the firmware of the solid-state storage device (which runs on the controller of the data processing component). Usually, the firmware gives access to the full physical disk (by providing an I/O interface which addresses the physical blocks). However, in order to prevent access to the physical storage blocks by the operating system, firmware may only provide I/O addressing of the logical storage blocks, rather than the physical storage blocks.

Rather than being inaccessible to the operating system, the physical storage blocks may be selectively accessible to the operating system. In other words, a user may be able to control whether the physical storage blocks are accessible to an operating system of a computing device. For example, the data processing component may comprise a switch which is configured to switch the data processing component between a secured state in which the physical storage blocks are inaccessible to an operating system of a computing device and an unsecured state in which the physical storage blocks are accessible to an operating system of a computing device. Enabling access to the physical storage blocks may be useful in e.g. a recovery scenario, reinitialization of the storage device to a blank state, or for modification of a security level of the storage device. In the unsecured state, the physical storage blocks may be accessible to the operating system of the computing device only via a dedicated physical interface. In some cases, the switch may be lockable to prevent accidental or unauthorized switching of the data processing component or the solid-state storage device from a secured state to an unsecured state.

As we will demonstrate later, if the solid-state storage device is almost full (as far as the operating system is able to tell), i.e. if most of the logical storage blocks are being used, then almost every logical deletion or overwrite of data corresponds to a physical deletion or overwrite of data. This inevitably means that the back-up data, which forms the cornerstone of the ability of the data processing component of the first aspect of the invention to resist ransomware attacks, is also being deleted or overwritten. Accordingly, to maximize the amount of back-up data which can be stored, relative to the amount of capacity accessible to an operating system of a computing device, the ratio of N:M may be large. In other words, only a small fraction of the physical storage blocks may be exposed (but not accessible) to the operating system. This increases the back-up capacity of the solid-state storage device, thereby increasing its resilience to ransomware attacks, and therefore increasing the security of the solid-state storage device. However, there is a trade-off between the security level, and the amount of wasted space (because the greater the back-up capacity of the solid-state storage device, the fewer logical storage blocks are accessible to the operating system, thereby reducing the useful storage capacity). A security level of a solid-state storage device or a data processing component may refer to the proportion of the physical storage blocks which are exposed or exposable to an operating system of a computing device, i.e. may be based on a ratio of M:N, or equivalently, N:M. The security level may be adjustable, essentially by selecting a number of logical storage blocks which are accessible to an operating system of a computing device. Adjustment of the security level may only be permitted when the data processing component or solid-state storage device is in an unsecured state, as defined previously.

In some cases, the value of N may be at least twice the value of M. In some cases, the value of N may be at least three times the value of M. In some cases, the value of N may be at least four times the value of M. In some cases, the value of N may be at least five times the value of M. In some cases, the value of N may be at least six times the value of M. In some cases, the value of N may be at least seven times the value of M. In some cases, the value of N may be at least eight times the value of M. In some cases, the value of N may be at least nine times the value of M. In some cases, the value of N may be at least ten times the value of M. In some cases, the value of N may be at least twenty times the value of M. In some cases, the value of N may be at least fifty times the value of M. In some cases, the value of N may be at least one hundred times the value of M. The ratio of N:M may adjustable between any pair of values set out in this paragraph.

We now discuss the operation of the data processing component in more detail. It is stated that the controller of the data processing component is configured to execute a series of steps "in response to receiving a request from an operating system of a computing device to store incoming data in a first specified logical storage block". It should be noted that the controller may further be configured to execute the step of receiving the request from the operating system of the computing device to store the incoming data in the first specified logical storage block. The request may comprise data identifying the first specified logical storage block, and may also comprise the data itself. Alternatively the request may comprise data identifying a location from which the incoming data can be obtained for storage to the solid-state storage device. The controller then identifies a first physical block which is mapped to the first specified logical storage block, based on the mapping. For example, the controller may execute a lookup on the mapping, the input of the lookup being the first specified logical storage block, or an identifier or index thereof, and the output being an identifier, index, or address of the mapped first physical storage block.

Next, it is determined that the first specified logical storage block is currently unavailable for the storage of incoming data. Thus, it will be appreciated that the invention focuses on the scenario in which the logical storage block in question is unavailable. However, before this determination, the method may further comprise determining whether the first specified logical storage block is available for storage of incoming data. A logical storage block may be available for storage of incoming data if, for example, the physical storage block to which it is mapped is not currently be used to store any data (i.e. it is empty). Alternatively, the physical storage block may currently be storing data which has previously been erased by a user, i.e. which can be overwritten. Each logical storage block may have or have associated therewith an availability flag which comprises a value indicative of whether that logical storage block is available for storage of incoming data. The value may be a binary value such as a 0 or 1, or TRUE or FALSE. The availability flag may take a value TRUE if the logical storage block is available for storage of incoming data, and may take a value FALSE if the logical storage block is unavailable for the storage of incoming data. Alternatively, the availability flag may indicate whether the logical storage block is currently in use, in which case it may take a value TRUE if the logical storage block is currently being used, and may take a value FALSE if the logical storage block is not currently being used. In this case, the availability flag may be referred to as a "usage flag". It will be appreciated that this is equivalent. Determining whether the first specified logical storage block is available for storage of incoming data may comprise interrogating the availability flag. After data is stored to the physical storage block mapped to a first specified logical storage block, the availability flag is preferably updated accordingly. For example, the availability value may be updated from TRUE to FALSE, or a usage flag may be updated from FALSE to TRUE.

If it is determined that the first specified logical storage block is available for storage of incoming data, the controller may be configured to store the incoming data in the first physical storage block (i.e. the physical storage block to which the first specified logical storage block is mapped). Alternatively put, in response to determining that the first specified logical storage block is available for storage of incoming data, the controller may be configured to store the incoming data in the first physical storage block. In some cases, the controller may first be configured to identify the first physical storage block to which the first specified logical storage block is mapped, before storing the incoming data to that first physical storage block.

If it is determined that the first specified logical storage block is unavailable for storage of incoming data, the method proceeds as outlined in the first aspect of the invention, i.e. in response to determining that the first specified logical storage block is unavailable for the storage of incoming data, identifying a second physical storage block of the plurality of N physical storage blocks. The manner in which the second physical storage block is identified may provide several advantageous technical effects.

Identifying the second physical storage block may be based on a most recent time at which the second physical storage block was updated or a number of times that the second physical storage block has been updated. Herein, "updated" may refer to any, some, or all of: having its mapping updated, having incoming data stored thereon, or having the data stored thereon deleted/erased. By identifying the second physical storage device in this manner it is possible to ensure that a physical storage block which has not recently been used is selected. When it comes to overwriting data, it is desirable to overwrite the oldest data on the solid-state storage device, since this data is most likely to be obsolete, and therefore the least useful in a recovery situation necessitated by a ransomware attack.

In order to track either a number of times that a physical storage block has been updated or the most recent time at which a given physical storage block was updated (equivalently, the time at which a given physical storage block was last updated), each physical storage block may have associated therewith, or may comprise a history value. The history value may provide an indication of either the number of times that the physical storage block has been updated, or a most recent time at which the physical storage block was updated. In some cases, each physical storage block may comprise a first history value indicating the number of times that the physical storage block has been updated and a second history value indicating the most recent time at which the physical storage block was updated. The memory may further store associations between an index, identifier, or address of each physical storage block and respective history value of that physical storage block.

Essentially, identification of the second physical block may be based on a criterion relating either to a most recent time of the last update, or on a number of times that the block has been updated. In many cases, these criteria may point to the same physical storage block, but this is not necessarily the case. The two approaches, along with ways in which they may be implemented, are discussed below. Preferably, the second physical storage block is an "old" physical storage block, i.e. one which has not been updated many times, or has not been updated for a long time. In this manner, it is possible to ensure that only old, obsolete data is overwritten.

More specifically, the second physical storage block may be an old physical storage block. Herein, an old physical storage block is defined as a physical storage block which meets a criterion specifying that its most recent update was before an threshold time or longer ago than a threshold interval, or that its most recent update occurred relatively earlier than a respective most recent update of each of a defined subset of the plurality of physical storage blocks. There may be a plurality of physical storage blocks meeting the selected criterion, and thus a plurality of old physical storage blocks from which to select or identify the second physical storage block. An old physical storage block may also be defined based on a criterion relating to number of times a physical storage block has been updated. Accordingly an old physical storage block may also be defined as a physical storage block which meets a criterion specifying that the number of times it has been updated is fewer than (or fewer than or equal to) a threshold number, or relatively fewer than a respective number of times that each of a defined subset of the plurality of physical storage blocks has been updated.

We first consider the "time" criterion. As discussed earlier, the second physical storage block is an "old" physical storage block, which may be determined based on a criterion relating to the most recent time at which the second physical storage block was updated. As implied by "old", which is used as a label for convenience, the criterion somehow specifies that the time at which the second physical storage block was most recently updated is before other physical storage blocks. In an abundance of caution, it must be noted that reference here to the "most recent time" at which the second physical storage block has been updated does not refer to the second physical storage block which was most recently updated. Rather, the second physical storage block is identified based on a consideration of the respective most recent update time of each of the physical storage blocks. Accordingly, identifying the second physical storage block may comprise identifying the physical storage block of the plurality of physical storage blocks which has been updated the least recently or which has not yet been used for the storage of incoming data. Herein, "updated" may refer to any, some, or all of: having its mapping updated, having incoming data stored thereon, or having the data stored thereon erased/deleted. In this manner, as incoming data is stored on the solid-state storage device, only old data is overwritten. Of course, this may only be relevant when all or nearly all of the physical storage blocks of the solid-state storage device are full. Before then, overwriting is not necessary, because there are unused blocks available.

Identifying a second physical storage block may comprise determining, for each of the plurality of physical storage blocks or a subset thereof, a respective time at which each physical storage block was most recently updated, e.g. based on the respective history values of each physical storage block or the subset thereof. Then, identifying the second physical storage block may comprise identifying the physical storage block of the plurality of physical storage blocks or the subset thereof which was updated the least recently, i.e. the physical storage block with the lowest history value. Alternatively, a physical storage block which has not been used for storage of data may be identified.

Identifying the second physical storage block may comprise identifying a physical storage block which was most recently updated longer ago than a predetermined threshold interval. The threshold interval may be one hour, one day, two days, or one week, for example. The threshold interval may be based on an activity of the solid-state storage device. For example, identifying the second physical storage block may comprise identifying a physical storage block of the plurality of physical storage blocks or subset thereof whose most recent update was before a period of peak activity of the solid-state storage device. In this context, the term "period of peak activity" may refer to a period during which the level of activity exceeded a particular threshold. A peak in activity is typically indicative of a large volume of data being written to the solid-state storage device, and it is reasonable to assume that such data may be important. By ensuring that only physical blocks which were most recently updated before the period of peak activity are selected, and therefore overwritten, it is possible to avoid overwriting the important recently-written data. Again this may be achieved by identifying blocks whose history value is indicative of a time earlier than the onset of the period of peak activity. A period of peak activity may alternatively be referred to as a "spike".

Identifying the second physical storage block may comprise ranking the plurality of physical storage blocks or a subset thereof based on the time of their most recent update (for example by ranking the physical storage blocks based on their history value), and selecting a physical storage block which is beneath a predetermined threshold rank as the second physical storage block. The rank may be expressed either in absolute terms, or in terms of a percentile, or equivalent. For example, the second physical storage block must be a physical storage block whose most recent update is in the bottom half, bottom quarter, or bottom 10% of the ordered list. It will be acknowledged that any value may be selected for the threshold. In some cases, this may be equivalent to identifying the oldest block, i.e. the physical storage block which was updated least recently.

When identifying the second physical storage block, the controller may be configured to scan, e.g. one at a time, the plurality of physical storage blocks, or a subset thereof, and to identify, as the second physical storage block, the first scanned physical storage block which meets a predetermined criterion. The predetermined criterion may be one of the criteria mentioned in the preceding paragraphs, e.g. the physical storage block was most recently updated longer ago than a predetermined threshold interval, the physical storage block was most recently updated before a period of peak activity. These criteria may be assessed based on the history value of the scanned physical blocks. By adopting this strategy, it is possible to obviate the need to assess all of the physical storage blocks, thereby improving the speed at which a suitable second physical storage block can be identified.

Before moving on to a discussion of the manner in which the second physical storage block is identified based on a number of times which it has been updated, we discuss the relationship between the history values and time. The controller may comprise a counter, which may have an initial value of zero. The controller may be configured to increment the counter each time any physical block is updated. Or, the controller may be configured to increment the counter at regular intervals, for example, every minute, every hour, every two hours, or every day. It will be appreciated that any suitable interval may be chosen. In this manner, the counter provides an effective representation of the passage of time. Each time a physical storage block is updated, its history value may be updated to reflect the value of the counter at that time, in order to provide a metric of the time at which the update takes place, without the need to provide an absolute time stamp. Of course, in some cases, the counter may count the absolute time, and the history value of a physical storage block may reflect the absolute time at which it is updated.

In these cases, identifying the second physical storage block may comprise identifying a physical storage block whose history value is less than the value of the counter, for example by scanning, e.g. one at a time, the plurality of physical storage blocks or a subset thereof, and to identify as the second physical storage block, the first scanned physical storage block whose history value is less than the value of the counter. If a plurality of physical storage blocks have a value less than the counter, then one of the earlier criteria mentioned may be used to select a physical storage block as the second physical storage block from among the physical storage blocks having a history value less than the value of the counter.

We now discuss how identification of the second physical storage block may be carried out based on a number of times that the second physical block has been updated. As discussed, each physical storage block may have associated therewith, or may comprise a history value. The history value may be indicative of a number of times that the physical storage block has been updated. Herein, "updated" may refer to any, some, or all of: having its mapping updated, having incoming data stored thereon, or having the data stored thereon erased/deleted. The history value may be an integer value of zero or more. A physical storage block which has never been mapped to a logical storage block, or never had incoming data stored thereon may have a history value of zero. Identifying the second physical storage block may comprise identifying the physical storage block with the lowest history value. Where a plurality of physical storage blocks have the same lowest history value, the second physical storage block may be identified based on an identifier of the second physical storage block. For example, the physical storage blocks may each have an identifier which comprises an integer value, and the physical storage block with the lowest integer value or the highest integer value may be selected as the second physical storage block.

Alternatively, identifying the second physical storage block may be based on another criterion, for example a history value which is below a predetermined threshold. In this case, identifying the second physical storage block may comprise scanning, e.g. one at a time, the plurality of physical storage blocks or a subset thereof, and identifying as the second physical storage block, the first scanned physical storage block whose history value meets the other criterion such as being below the predetermined threshold.

When incoming data is stored to the first physical storage block (i.e. when it is determined that the first specified logical storage block is available for storage of incoming data), the controller may be configured to increment the history value of the first physical storage block by 1, since the block has been updated by having data stored thereon. In other cases, when a second physical storage block is identified, the method further comprises updating the mapping to associate the first specified logical storage block with the second physical storage block and storing the incoming data in the second physical storage block. In that case, the controller may be configured to increment the history value of the second physical storage block e.g. by 1, either after the mapping has been updated or after the incoming data is stored to the second physical storage block. It is preferred that the history value is updated only once as a consequence of these two steps.

As discussed earlier, the controller may comprise a counter, which may have an initial value of zero. Rather than updating the counter on the basis of time, the controller may be configured to increment the value of the counter under other conditions. The data processing component and/or solid-state storage device may be initialized such that each of the M logical storage blocks is mapped to a respective one of the plurality of N physical storage blocks. Each of the physical storage blocks which is mapped to a logical storage block may be initialized with a history value of 1, and each of the physical storage blocks which is unmapped (since there are more physical storage blocks than logical storage blocks) may be initialized with a history value of 0. Identifying a second physical storage block having a lowest history value may comprise determining whether there exists any physical storage block of the plurality of physical storage blocks or a subset thereof having a history value which is less than or equal (or just less than) to the value of the counter at that time. This may be achieved by scanning, e.g. one at a time, the plurality of physical storage blocks or a subset thereof, and identifying as the second physical storage block a first scanned physical storage block having a history value less than or equal (or just less than) the value of the counter at the time.

If there is, or in response to a determination that there is, that physical storage block may be selected as the second physical storage block. Where a plurality of physical storage blocks have a history value less than or equal to (or just less than) the value of the counter, the second physical storage block may be identified based on an identifier of the second physical storage block. For example, the physical storage blocks may each have an identifier which comprises an integer value, and the physical storage block with the lowest integer value or the highest integer value may be selected as the second physical storage block.

If there is no physical storage block with a history value which is less than or equal to (or just less than) the value of the counter, or in response to a determination that there is not, the controller may be configured to increment the value of the counter by 1. The determination is then repeated in the same manner until a physical storage block with a history value less than or equal to (or just less than) the value of the counter is identified. In this manner, the value of the counter may be considered to represent the maximum number of times that any physical storage block of the plurality of physical storage blocks has been updated. Alternatively put, the value of the counter represents the history value of the block which has been updated the greatest number of times.

The above disclosure relates to the writing of new data to a solid-state storage device, which may include updating a mapping and overwriting existing data stored in a physical storage block. However, the present invention also enables the deletion or erasing of data from a specific logical storage block. Specifically, in response to a request to erase data from a second specified logical storage block which is mapped to a third physical storage block of the plurality of physical storage blocks, the controller may be configured to identify a fourth physical storage block of the plurality of physical storage blocks based on a history value of the fourth storage block. Then the controller may be configured to update the mapping to associate the second specified logical storage block with the fourth physical storage block. The controller may then be configured to label the second logical storage block as available for storage of incoming data. For example, this may be achieved by updating an availability flag associated with the second specified logical storage block to indicate that the second specified logical storage block is available for storage of incoming data. This may be done, for example, by setting an availability flag to TRUE or a usage flag to FALSE. By executing these steps in response to a request to erase data from a logical storage block, the block becomes associated with a different physical block whose data may be older, and therefore more appropriate for overwriting. The data which was originally associated with the second specified logical storage block remains stored on the third physical storage block, but this is no longer mapped to the second specified logical storage block, and therefore effectively forms back-up data. The controller may further be configured to update the history value of the fourth physical storage block, for example to increment the number of times which it has been updated, or the time at which the mapping was updated, or the time at which the fourth physical storage block was labelled as available for storage of incoming data, for example at the same time as the mapping is updated or the fourth storage block was labelled as available for storage of incoming data, before (preferably immediately before) the mapping is updated or the fourth storage block was labelled as available for the storage of incoming data, or after (preferably immediately after) the mapping is updated or the fourth storage block is labelled as available for the storage of incoming data. Alternatively, the controller may only be configured to update the history value of the fourth physical storage block only when new incoming data is stored to the fourth physical block.

The fourth physical storage block may be identified in an identical fashion to the second physical storage block, as in the case of writing new data to the solid-state storage device. In other words, identification of the fourth physical block may be based on a criterion relating either to a most recent time of the last update, or on a number of times that the block has been updated. In many cases, these criteria may point to the same physical storage block, but this is not necessarily the case. The two approaches, along with ways in which they may be implemented, are discussed below. Preferably, the fourth physical storage block is an "old" physical storage block, i.e. one which has not been updated many times, or has not been updated for a long time. In this manner, it is possible to ensure that only old, obsolete data is overwritten.

Herein, "updated" may refer to any, some, or all of: having its mapping updated, having incoming data stored thereon, or having the data stored thereon deleted/erased. By identifying the fourth physical storage device in this manner it is possible to ensure that a physical storage block which has not recently been used is selected. When it comes to overwriting data, it is desirable to overwrite the oldest data on the solid-state storage device, since this data is most likely to be obsolete, and therefore the least useful in a recovery situation necessitated by a ransomware attack.

We first consider the "time" criterion. As discussed earlier, the fourth physical storage block is an "old" physical storage block, which may be determined based on a criterion relating to the most recent time at which the fourth physical storage block was updated. As implied by "old", which is used as a label for convenience, the criterion somehow specifies that the time at which the fourth physical storage block was most recently updated is before other physical storage blocks. In an abundance of caution, it must be noted that reference here to the "most recent time" at which the fourth physical storage block has been updated does not refer to the fourth physical storage block which was most recently updated. Rather, the second physical storage block is identified based on a consideration of a respective most recent update time of each of the physical storage blocks. Accordingly, identifying the fourth physical storage block may comprise identifying the physical storage block of the plurality of physical storage blocks or a subset thereof which has been updated the least recently or which has not yet been used for the storage of incoming data. Herein, "updated" may refer to any, some, or all of: having its mapping updated, having incoming data stored thereon, or having the data stored thereon erased/deleted. In this manner, as incoming data is stored on the solid-state storage device, only old data is overwritten. Of course, this may only be relevant when all or nearly all of the physical storage blocks of the solid-state storage device are full. Before then, overwriting is not necessary, because there are unused blocks available.

Identifying a fourth physical storage block may comprise determining, for each of the plurality of physical storage blocks or a subset thereof, a respective time at which each physical storage block was most recently updated, e.g. based on the respective history values of each physical storage block or subset thereof. Then, identifying the fourth physical storage block may comprise identifying the physical storage block of the plurality of physical storage blocks of subset thereof which was updated the least recently, i.e. the physical storage block with the lowest history value. Alternatively, a physical storage block which has not been used for storage of data may be identified.

Identifying the fourth physical storage block may comprise identifying a physical storage block which was most recently updated longer ago than a predetermined threshold interval. The threshold interval may be one hour, one day, two days, or one week, for example. The threshold interval may be based on an activity of the solid-state storage device. For example, identifying the fourth physical storage block may comprise identifying a physical storage block of the plurality of physical storage blocks or a subset thereof whose most recent update was before a period of peak activity of the solid-state storage device. A peak in activity is typically indicative of a large volume of data being written to the solid-state storage device, and it is reasonable to assume that such data may be important. By ensuring that only physical blocks which were most recently updated before the period of peak activity are selected, and therefore overwritten, it is possible to avoid overwriting the important recently-written data. Again this may be achieved by identifying blocks whose history value is indicative of a time earlier than the onset of the period of peak activity. A period of peak activity may alternatively be referred to as a "spike".

Identifying the fourth physical storage block may comprise ranking the plurality of physical storage blocks or a subset thereof based on the time of their most recent update (for example by ranking the physical storage blocks based on their history value), and selecting a physical storage block which is beneath a predetermined threshold rank as the fourth physical storage block. The rank may be expressed either in absolute terms, or in terms of a percentile, or equivalent. For example, the fourth physical storage block must be a physical storage block whose most recent update is in the bottom half, bottom quarter, or bottom 10% of the ordered list. It will be acknowledged that any value may be selected for the threshold. In some cases, this may be equivalent to identifying the oldest block, i.e. the physical storage block which was updated least recently.

When identifying the fourth physical storage block, the controller may be configured to scan, e.g. one at a time, the plurality of physical storage blocks, or a subset thereof, and to identify, as the fourth physical storage block, the first scanned physical storage block which meets a predetermined criterion. The predetermined criterion may be one of the criteria mentioned in the preceding paragraphs, e.g. the physical storage block was most recently updated longer ago than a predetermined threshold interval, the physical storage block was most recently updated before a period of peak activity. These criteria may be assessed based on the history value of the scanned physical blocks. By adopting this strategy, it is possible to obviate the need to assess all of the physical storage blocks, thereby improving the speed at which a suitable physical storage block can be identified.

In those implementations in which the controller comprises a counter used as a measure of time, identifying the fourth storage block may comprise identifying a physical storage block whose history value is less than the value of the counter. This may be achieved, for example by scanning, e.g. one at a time, the plurality of physical storage blocks or a subset thereof, and to identify as the fourth physical storage block, the first scanned physical storage block whose history value is less than the value of the counter. If a plurality of physical storage blocks have a value less than the counter, then one of the earlier criteria mentioned may be used to select a physical storage block as the fourth physical storage block from among the physical storage blocks having a history value less than the value of the counter.

We now discuss how identification of the fourth physical storage block may be carried out based on a number of times that the fourth physical block has been updated. As previously discussed, each physical storage block may have associated therewith, or may comprise a history value, which may be indicative of a number of times that the physical storage block has been updated. Herein, "updated" may refer to any, some, or all of: having its mapping updated, having incoming data stored thereon, or having the data stored thereon erased/deleted. Identifying the fourth physical storage block may comprise identifying the physical storage block with the lowest history value. Where a plurality of physical storage blocks have the same lowest history value, the fourth physical storage block may be identified based on an identifier of the fourth physical storage block. For example, the physical storage blocks may each have an identifier which comprises an integer value, and the physical storage block with the lowest integer value or the highest integer value may be selected as the fourth physical storage block.

Alternatively, identifying the fourth physical storage block may be based on another criterion, for example a history value which is below a predetermined threshold. In this case, identifying the fourth physical storage block may comprise scanning, e.g. one at a time, the plurality of physical storage blocks or a subset thereof, and identifying as the fourth physical storage block, the first scanned physical storage block whose history value meets the other criterion such as being below the predetermined threshold.

When the fourth physical storage block is identified, the method further comprises updating the mapping to associate the second specified logical storage block with the fourth physical storage. In that case, the controller may be configured to increment the history value of the fourth physical storage block by 1 after the mapping has been updated.

Identifying a fourth physical storage block having a lowest history value may comprise determining whether there exists any physical storage block of the plurality of storage blocks having a history value which is less than or equal (or just less than) to the value of the counter at that time. This may be achieved by scanning, e.g. one at a time, the plurality of physical storage blocks or a subset thereof, and identifying as the fourth physical storage block a first scanned physical storage block having a history value less than or equal (or just less than) the value of the counter at the time.

If there is, or in response to a determination that there is, that physical storage block may be selected as the fourth physical storage block. Where a plurality of physical storage blocks have a history value less than or equal to (or just less than) the value of the counter, the fourth physical storage block may be identified based on an identifier of the fourth physical storage block. For example, the physical storage blocks may each have an identifier which comprises an integer value, and the physical storage block with the lowest integer value or the highest integer value may be selected as the fourth physical storage block.

If there is no physical storage block with a history value which is less than or equal to (or just less than) the value of the counter, or in response to a determination that there is not, the controller may be configured to increment the value of the counter by 1. The determination is then repeated in the same manner until a physical storage block with a history value less than or equal to (or just less than) the value of the counter is identified.

We now discuss the physical implementation of the data processing component according to the first aspect of the present invention. The data processing component may be implemented in the form of a chip, disk, or any other hardware component which is locatable within a solid-state storage device. The memory of the data processing component may comprise firmware in the form of instructions which when executed by the controller, cause it to execute the steps of the method.

A second aspect of the invention provides a similar data processing component to the first aspect of the invention. Specifically, a second aspect of the invention provides a data processing component for controlling storage of data to a solid-state storage device comprising a plurality of $N$ physical storage blocks, the data processing component comprising a controller and a memory, wherein: the memory stores a mapping between a plurality of M logical storage blocks accessible by an operating system of a computing device and a respective physical storage block of the plurality of $N$ physical storage blocks; and the controller is configured, in response to receiving a request from the operating system to erase data from a second specified logical storage block which is mapped to a third physical storage block of the plurality of physical storage blocks, to execute a method comprising: identifying a fourth physical storage block of the plurality of physical storage blocks; updating the mapping to associate the second specified logical storage block with the fourth physical storage block; and labelling the second logical storage block as available for storage of incoming data.

Thus, the second aspect of the invention relates to the deletion or erasing of data. The first and second aspects of the invention may be combined, and all features (optional or otherwise) set out above in respect of the first aspect of the invention apply equally well to the second aspect of the invention, except where clearly technically incompatible, or where context clearly dictates otherwise.

A third aspect of the invention provides a solid-state or other suitable storage device comprising: a plurality of $N$ physical storage blocks; and the data processing component of either the first aspect of the invention or the second aspect of the invention. The data processing component may be removable from the solid-state storage device, or may be integrated within it.

A fourth aspect of the invention provides a computer-implemented method of controlling storage of data to a solid-state storage device comprising a plurality of $N$ physical storage blocks, the computer-implemented method comprising: receiving a request from the operating system to store incoming data in a first specified logical storage block which is mapped to a first physical storage block according to a mapping between a plurality of M logical storage blocks accessible by an operating system of a computing device and a respective physical storage block of the plurality of $N$ physical storage blocks; in response to receiving the request, determining that the first specified logical storage block is unavailable for the storage of incoming data; and in response to determining that the first specified logical storage block is unavailable for the storage of incoming data: identifying a second physical storage block of the plurality of $N$ physical storage blocks for storage of the incoming data. The computer-implemented method may further comprise storing the incoming data in the second physical storage block. It will be acknowledged that the computer-implemented method of the fourth aspect of the invention is analogous to the data processing component of the first aspect of the invention. Accordingly, any features (optional or otherwise) set out above in respect of the first aspect of the invention apply equally well to the fourth aspect of the invention, except where clearly technically incompatible, or where context clearly dictates otherwise.

A fifth aspect of the invention provides a computer-implemented method of controlling storage of data to a solid-state storage device comprising a plurality of $N$ physical storage blocks, the computer-implemented method comprising: receiving a request from the operating system to erase data from a second specified logical storage block which is mapped to a third physical storage block of the plurality of physical storage blocks, according to a mapping between a plurality of M logical storage blocks accessible by an operating system of a computing device and a respective physical storage block of the plurality of $N$ physical storage blocks; identifying a fourth physical storage block of the plurality of physical storage blocks; updating the mapping to associate the second specified logical storage block with the fourth physical storage block; and labelling the second logical storage block as available for storage of incoming data. Any features (optional or otherwise) set out above in respect of the first aspect of the invention, the second aspect of the invention, or the fourth aspect of the invention apply equally well to the fifth aspect of the invention, except where clearly technically incompatible, or where context clearly dictates otherwise.

A sixth aspect of the invention provides a computer program comprising instructions which, when the program is executed by a computer, cause the computer to execute the computer-implemented method of the fourth aspect of the invention or the fifth aspect of the invention. A seventh aspect of the invention provides a computer-readable storage medium having stored thereon the computer program of the sixth aspect of the invention.

The invention includes the combination of the aspects and preferred features described except where such a combination is clearly impermissible or expressly avoided.

BRIEF DESCRIPTION OF THE DRAWINGS

Embodiments of the present invention will now be described with reference to the accompanying drawings, in which:

- Fig. 1 is a schematic diagram illustrating the relationship between a solid-state storage device and an operating system.

- Fig. 2 is a schematic diagram illustrating a mapping between M logical storage blocks and $N$ physical storage blocks.

- Fig. 3 is a schematic diagram illustrating a logical storage block which may be employed in some implementations of the present invention.

- Fig. 4 is a schematic diagram illustrating a physical storage block which may be employed in some implementations of the present invention.

- Fig. 5 is a flowchart illustrating a high-level method according to the present invention.

- Fig. 6 is a flowchart illustrating an initialization process for a data storage component according to the present invention.

- Fig. 7 is a flowchart illustrating a process in which incoming data may be stored to a solid-state storage device according to the present invention.

- Figs. 8A to 8E illustrate the values of parameters during a data writing operation.

- Figs. 9A to 9D illustrate the values of parameters during a data overwriting operation.

- Fig. 10 is a flowchart illustrating a process in which data is erased from a logical storage block, or more strictly speaking, in which a logical storage block is freed for use.

- Fig. 11 is a flowchart illustrating an alternative process in which incoming data may be stored to a solid-state storage device according to the present invention.

- Fig. 12 is a flowchart illustrating an alternative process in which data is erased from a logical storage block, or more strictly speaking, in which a logical storage block is freed for use.

DETAILED DESCRIPTION OF THE DRAWINGS

Aspects and embodiments of the present invention will now be discussed with reference to the accompanying figures. Further aspects and embodiments will be apparent to those skilled in the art. All documents mentioned in this text are incorporated herein by reference.

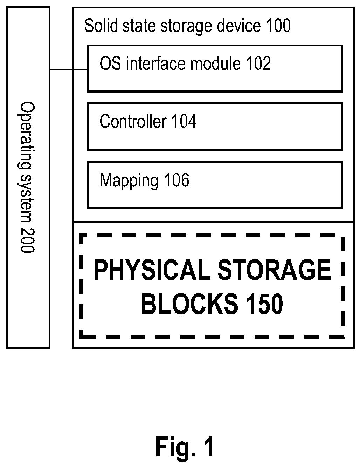

Fig. 1 is a highly schematic diagram illustrating the relationship between various components which may be used to implement the present invention. In Fig. 1, the solid-state storage device (SSSD) 100 comprises an operating system (OS) interface module 102, a controller 104, and stores a mapping 106. The system also includes physical storage blocks 300.

An OS 200 is able to access the SSSD via the OS interface module 100. It should be noted that in the example shown in Fig. 1, the device is a SSSD 100, but the steps which are described below may equivalently be applied to any other suitable storage device. It is important to note that the OS 200 does not have direct access to the physical storage blocks 200. It is able to access them only via the OS interface module 102 and controller 104. Broadly, a combination of the controller 104 and mapping 106 defines a set of logical storage blocks, each of which corresponds to one of the physical storage blocks 300, as defined by the mapping 106. The operating system 200 only "sees" the logical storage blocks, and therefore can only make requests to store data in one of the logical storage blocks. The controller 104, using the mapping 106, then determines which one of the physical storage blocks 300 corresponds to the logical storage block specified by the OS 200, and causes the incoming data to be stored in that physical storage block. The details of how this is achieved are set out in the following.

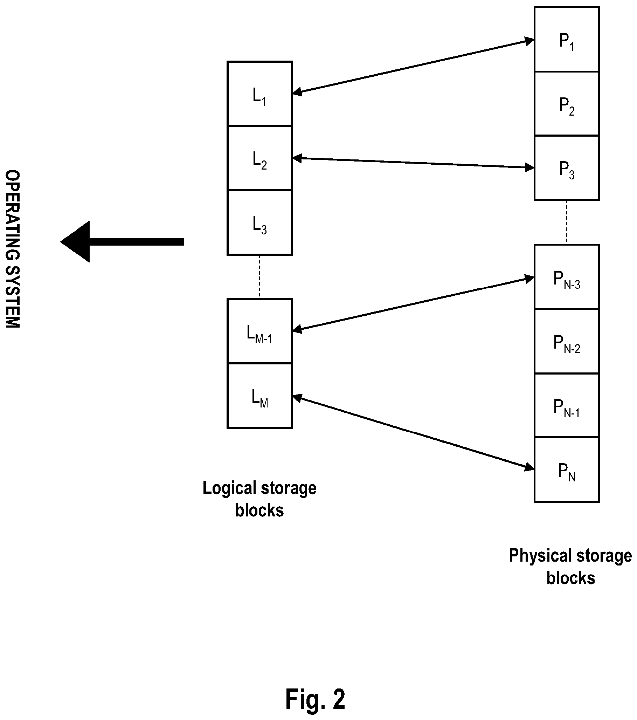

Fig. 2 is a schematic diagram illustrating an example of the mapping 106 between a set of logical storage blocks $L_i$ and a set of physical storage blocks $P_i$. Herein, the lowercase subscripts "$m$" and "$n$" represent an index of the storage block in question, wherein $1 \leq m \leq M$, and $1 \leq n \leq N$. Accordingly, there are $M$ logical storage blocks in total, denoted $\{L_1, L_2, L_3, ..., L_{M-1}, L_M\}$, and $N$ physical storage blocks in total, denoted $\{P_1, P_2, P_3, P_{N-3}, P_{N-2}, P_{N-1}, P_N\}$. It is an important feature of the invention that $N > M$, i.e. that there are more physical storage blocks than logical storage blocks. The reason for this is explained later with reference to the processes which are executed when new incoming data is stored on the SSSD 100. Each of the logical storage blocks $L_i$ is mapped to a respective physical storage block $P_i$. For example, as shown in Fig. 2: $L_1$ is mapped to $P_1$; $L_2$ is mapped to $P_3$, $L_{M-1}$ is mapped to $P_{N-3}$; and $L_M$ is mapped to $P_N$. These mappings are not fixed, and may be updated dynamically. Indeed, it is this dynamic updating of the mappings stored in mapping 106 which enables the advantageous technical effects of the present invention. Fig. 2 also illustrates schematically that the OS 200 is only able to access the logical storage blocks. The representation of mapping 106 in Fig. 2 is schematic only, and in reality, the mapping 106 may be stored in the form of a plurality of associations between an address or logical indicator of a logical storage block, and a physical address denoting the position of the associated physical storage block within the SSSD 100.

Before describing the computer-implemented method which is executed, we briefly highlight some important features of the logical storage blocks and physical storage blocks:

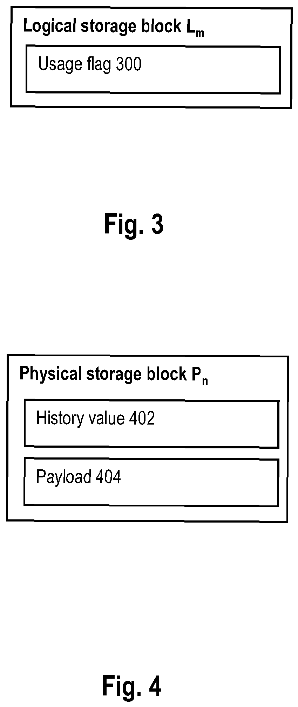

As shown in Fig. 3, each logical storage block $L_m$ comprises a usage flag 300. The usage flag 300 may take a Boolean TRUE or Boolean FALSE value, or other equivalent binary values. The usage flag 300 provides an indication of whether the logical storage block $L_m$ in question is available for the storage of data. If the usage flag 300 is set to TRUE or equivalent, this is an indication that the logical storage block (or more specifically, the physical storage block which is mapped to that logical storage block) *cannot* be used to store more incoming data at the time when an interrogation of the usage flag 300 of that logical storage block takes place. In contrast, if the usage flag 300 is set to FALSE, this is an indication that the logical storage block (or more specifically, the physical storage block which is mapped to that logical storage block) *can* be used to store more incoming data at the time when an interrogation of the usage flag 300 of that logical storage block takes place. The usage flag 300 of a logical storage block may be set to FALSE if the corresponding physical storage block is empty, or if the data currently stored in the corresponding physical storage block is permitted to be overwritten, e.g. because it is out-of-date. The usage flag 300 of a logical storage block $L_m$ may be denoted:

$$\text{used}(m) \; = \; \text{TRUE}$$

It should be stressed that TRUE does not necessarily mean that the logical storage block cannot be used and FALSE does not necessarily mean that the logical storage block can be used. Rather, the data stored in the usage flag 300 may instead be an indicator of whether the logical storage block in question is available, rather than used.

As shown in Fig. 4, each physical storage block $P_n$ includes a history value 402, and a payload 404, discussed in turn below:

- The history value 402 is an integer value which may take values from zero upwards. The history value 402 is an indication of many times the physical block in question has been used to store different incoming data. The history value 402 may be incremented, for example, each time the data stored in that physical block changes, each time the physical storage block is used to store different data, or each time the mapping of the physical storage block is changed. The significance of the history value 402 will become further apparent when discussing the data storage, overwriting, and erasing processes shortly.

- The payload 404 corresponds simply to the data which is stored in the physical storage block $P_n$.

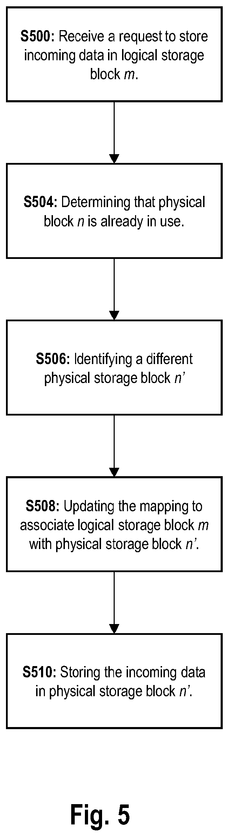

Fig. 5 is a flowchart illustrating a high-level computer-implemented method according to the present invention. The method may be executed, for example, by the SSSD 100 and its components, shown in Fig. 1, but the present invention is by no means limited to such architecture. In a first step S500, a request to store incoming data $D$ is received by e.g. the controller 104 of the SSSD 100, from e.g. OS 200, i.e. an OS which has access to the SSSD 100. The request may specify an index $m$ of the logical storage block $L_m$ in which the data $D$ is to be stored. The request cannot contain an indication of a physical storage block because, as discussed, the OS 200 does not have direct access to any of the physical storage blocks, and therefore cannot, for example, specify an address of a desired physical storage block.

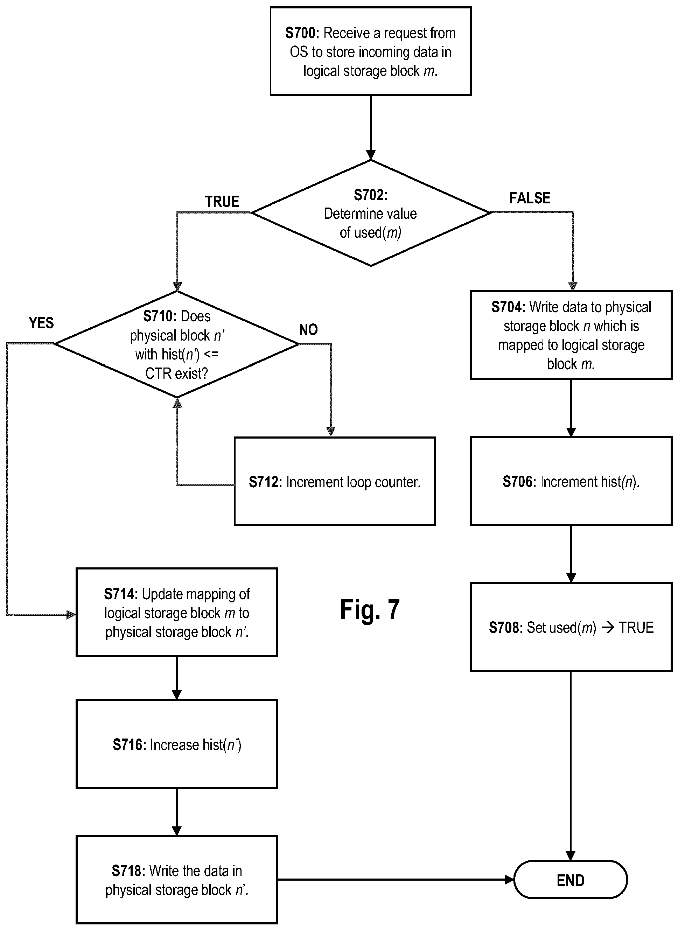

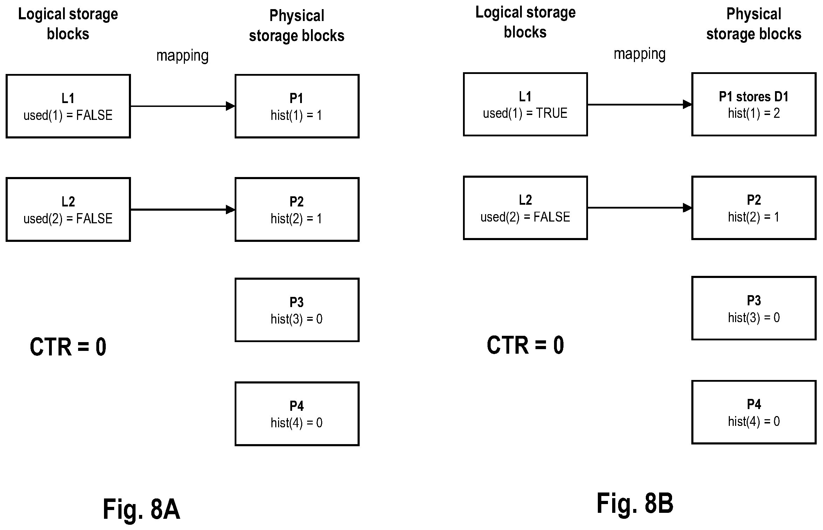

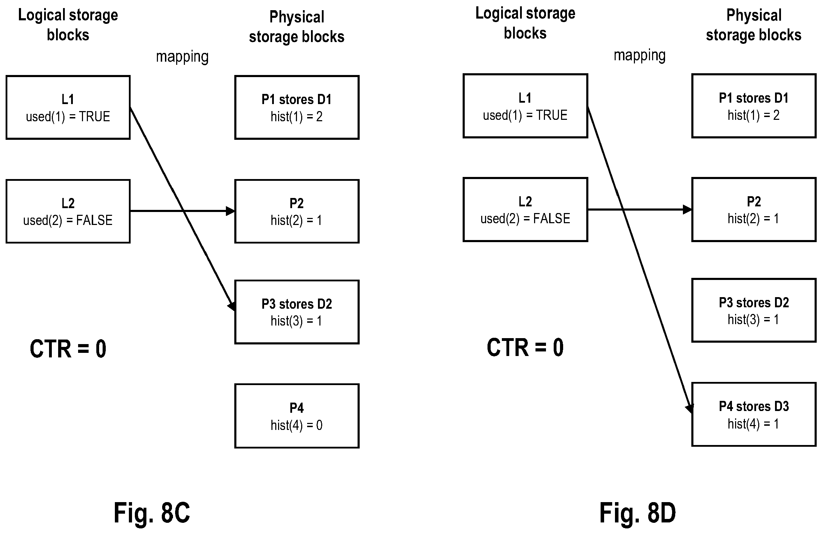

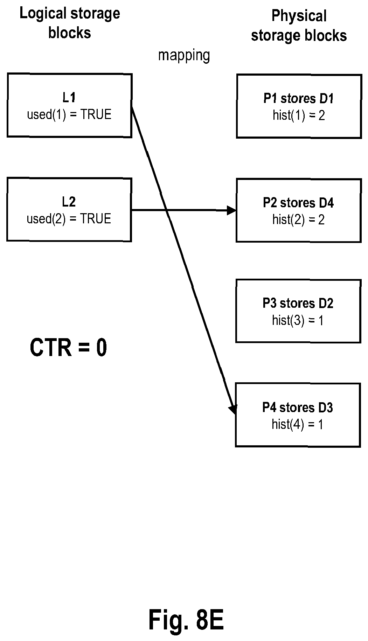

After the request has been received by the controller 104, the controller may identify (not shown) the index $n$ of the physical storage block $P_n$ which is mapped to the logical storage block $L_m$ which formed the subject of the request received in step S500. The controller 104 may, more specifically, identify the address of the physical storage block $P_n$ corresponding to the logical storage block $L_m$. The main benefits of the present invention arise in those scenarios in which it is determined that the physical storage block $P_n$ corresponding to the logical storage block $L_m$ is already in use. Accordingly, in step S504 of Fig. 5, it is determined that the the physical storage block $P_n$ corresponding to the logical storage block $L_m$ is already in use. The way in which this is done, and the events which take place in the event that the physical storage block $P_n$ corresponding to the logical storage block $L_m$ is not already in use will be discussed later in this application, with reference to e.g. Figs. 7 and 8.

In response to the determination that the physical storage block $P_n$ corresponding to the logical storage block $L_m$ is already in use, in step S506, e.g. the controller 104 of the SSSD 100 identifies another physical storage block $P_{n'}$. This may be done by identifying the index $n'$ of the physical storage block or an address of the physical storage block $P_{n'}$.

Having identified an alternative physical storage block $P_{n'}$, the process proceeds to step S508, in which the mapping 106 is updated. Specifically, the mapping of $L_m \rightarrow P_n$ is updated to $L_m \rightarrow P_{n'}$. This process may be executed by the controller 104. After the mapping 106 has been updated, the process proceeds to step S510 in which the incoming data $D$ is stored in physical storage block $P_{n'}$. It will be appreciated that, by adopting the process of Fig. 5, rather than overwriting the data in the original physical storage block $P_n$, the original data stored in that physical storage block $P_n$ can be retained, essentially to form a back-up. In other words, the present invention enables multiple copies of data to be retained on SSSD 100, without allowing the OS 200 access to all of the physical storage blocks $P_n$. The provision of a large amount of redundant data means that if there is a ransomware or other attack on the SSSD 100, it will take much longer to delete or corrupt all of the data on the SSSD 100, meaning that a user can take action (e.g. by physically disconnecting SSSD 100) before a large volume of data is affected.

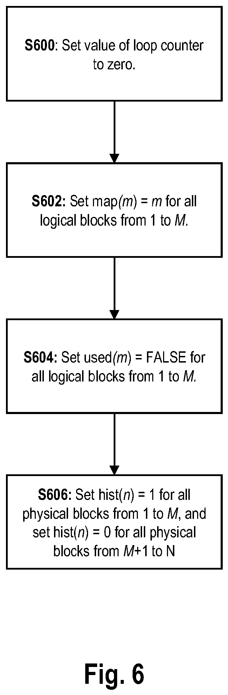

Figs. 6 to 10 illustrate more detailed implementations of the present invention which include additional optional features which provide further clarifications and improvements. It should be noted that all of the features described below may be treated as optional, and all combinations of optional features are envisaged.

Fig. 6 illustrates a process by which SSSD 100 may be initialized so that it is able to execute the process of e.g. Figs. 5, 7, and 8. In a first step S600, a value of a counter of the SSSD 100 may be set to zero. Herein, a counter is a component of the SSSD 1000 which may form e.g. part of the controller 104, which acts as a simple counter, whose value may be incremented based on instructions from e.g. the controller 104. The counter preferably maintains an integer value. The significance of the counter is explained shortly. Once the counter has been set to zero, an initial mapping 106 is generated by the controller 104. In the initial mapping 106, each logical storage block $L_m$ may be mapped to the physical storage block $P_m$ having the same index. In this application, the mapping of an index $m$ of a logical storage block $L_m$ to an index $n$ of a physical storage block $P_n$ is denoted:

$$\mathrm{map}(m) = n$$

Accordingly, step S602 initializes mapping 106 as follows, for all blocks from 1 to $M$, i.e. for all logical storage blocks $L_m$:

$$\mathrm{map}(m) = m$$

In step S604, the usage flag 300 of all logical storage blocks (i.e. from 1 to $M$) $L_m$ is set to FALSE, thereby indicating that all of the logical storage blocks $L_m$

are available for the storage of data, or alternatively put, that none of the logical storage blocks $L_m$ are currently in use. This makes sense during the initialization phase because it takes place before usage of the SSSD 100.

In step S606, the history value 402 of all physical storage blocks $P_m$ from 1 to $M$, i.e. for all physical storage blocks $P_n$ for which a mapping to a logical storage block $L_m$ has been assigned, is set to 1. And, the history value 404 of all physical storage blocks $P_n$ for which no mapping has been assigned (i.e. from $M + 1$ to $N$), is set to 0. This may be denoted as follows:

$$\texttt{hist}(n) \; = \; 1 \; \texttt{for} \; 1 \, \le \, n \, \le \, M$$

$$\texttt{hist}(n) \; = \; 0 \; \texttt{for} \; M \, < \, n \, \le \, N$$

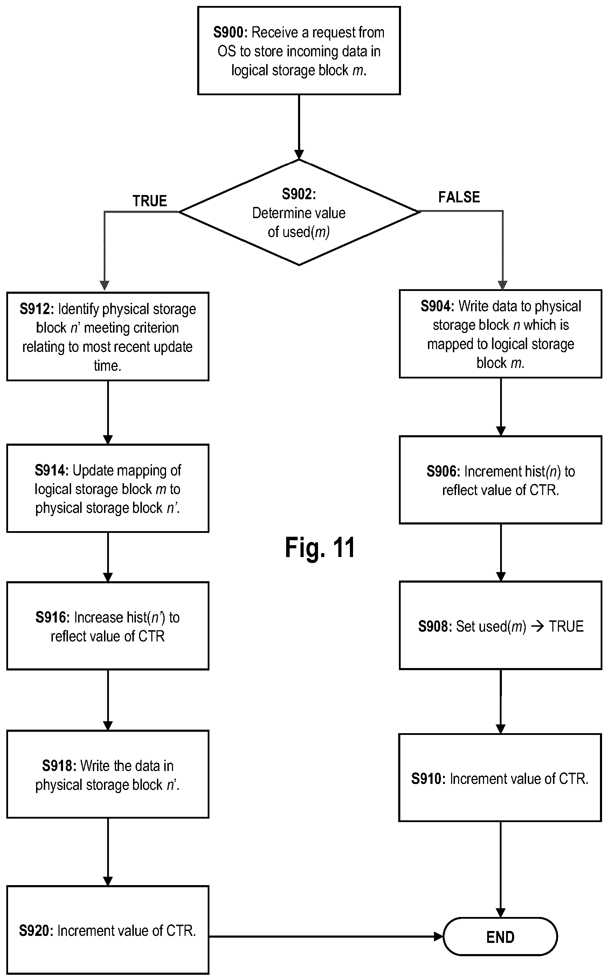

At this point, the SSSD 100 is initialized for use. There are two kinds of requests that may be received. The first is a request for the writing of new data D to a logical storage block $L_m$, the second is a request to erase data from a logical storage block $L_m$. These processes are explained in detail in Figs. 7 and 11 respectively. To reiterate, the specific processes shown in these drawings are exemplary, and features should be treated as optional unless explicitly stated otherwise.

Fig. 7 is a flowchart illustrating a process for writing new data D to the SSSD 100. In a first step S700, a request is received from the OS 200 to store incoming data D to a logical storage block $L_m$. The OS 200 is only able to access information defining the logical storage blocks $L_m$, in order to provide a barrier between the OS 200 and the physical storage blocks 250 of the SSSD 100. In some cases, the specified logical storage block $L_m$ may be empty (or in a state where new data can be written to it), and in other cases, the physical storage block $P_n$ corresponding to the specified logical storage block $L_m$ may already contain data. The process proceeds differently depending on which state the specified logical storage block $L_m$ is in. Accordingly, in step S702, the usage flag 300 of the specified logical storage block $L_m$ is determined, e.g. by the controller 104. This may be done by interrogating the usage flag 300 of the specified logical storage block $L_m$ in order to ascertain the value of used($m$), where $m$ is the index of the logical storage block $L_m$. If it is determined that the logical storage block $L_m$ is not in use, i.e. that:

$$\texttt{used}(m) \; = \; \texttt{FALSE}$$

the method proceeds to step S704, in which the controller 104 determines, using the mapping 106, the physical storage block $P_n$ which corresponds to the logical storage block $L_m$. The index $n$ of the physical storage block $P_n$ which corresponds to the index $m$ of the logical storage block $L_m$ may be represented as:

$$n \; = \; \texttt{map}(m)$$

Having determined the appropriate physical storage block $P_n$, the controller 104 then causes the data D to be written to that physical storage block $P_n$. Once the data has been written to the physical storage block $P_n$, in step S706, the history value 402 of the physical storage block $P_n$ is incremented by 1. This effectively provides an indication that the physical storage block $P_n$ has been "used" a further time. In the case where the block has never been used before, i.e. in which the history value 402 was initially 1 (see step S602 of Fig. 6), the value will increase from 1 to 2. In a general case, the history value 402 of the physical block $P_n$ to which data has just been written will be incremented from $k$ to $k + 1$. Having written the data D to the physical storage block $P_n$ and increased its history value 402, in step S708, the usage flag 300 of the physical storage block $P_n$ is changed to TRUE. This indicates to the controller 104, in subsequent operations, that there is data written to the physical storage block $P_n$, and therefore that it is unavailable for immediate subsequent use. Of course, a SSSD 100 is of little use if, once each physical storage block $P_n$ has been used once, data cannot be overwritten or erased, and the SSSD 100 is essentially unusable for further data storage. The process which takes place if it is determined that the usage value 300 of the specified logical storage block $L_m$ to which the request in step S700 corresponds is TRUE sheds some light on how the SSSD 100 operates when the physical storage blocks $P_n$ are full.

In step S710, a further determination takes place by the controller 104, namely whether any physical storage block $P_{n'}$ exists with a history value 402 which is less than or equal to the value of the counter at that point. If it is determined that no such physical storage block $P_{n'}$ exists, the process proceeds to step S712, in which the value of the counter is incremented by 1, and the process returns to the determination in step S710. Essentially, this process is iterated until a physical storage block $P_{n'}$ exists with a history value 402 which is less than the value of the counter. It is straightforward to comprehend that this condition must eventually be met since the value of the counter is incremented, while none of the history values 402 change, so at some point, the value of the counter must exceed the lowest history value 402 of all of the physical storage blocks $P_m$. When the determination in step S710 is positive, the process proceeds to step S714, in which the mapping 106 is updated such that the logical storage block $L_m$ which formed the subject of the request in step S700 is mapped to $P_{n'}$ (i.e. rather than $P_n$). This may be denoted:

$$\texttt{map}(m) \; = \; n \; \rightarrow \; = \; n'$$

After the mapping has been updated, in step S716, the history value 402 of the new physical storage block $P_{n'}$ is incremented by 1 in step S716. Generally, the history value 402 of the physical storage block $P_{n'}$, or hist($n'$) increases from $k$ to $k + 1$. Then, after the mapping 106 has been updated, and the history value 402 incremented, in step S718, the incoming data D is written to the block $P_{n'}$. It is useful to consider what the effect of this is. It will be noted that no data has been erased or overwritten from the earlier block $P_n$. Rather, the mapping 106 has been updated, and the data has been written to a block which has either not been used, or has not been used for the longest time. This means that the earlier data remains stored on a physical storage block $P_n$ of the SSSD 100, essentially forming a backup. We now illustrate this with a simple example in which a series of requests are received, to store data D1, D2, D3, and D4, with reference to Figs. 8A to 8E.

Fig. 8A is a schematic of a mapping between a series of two logical storage blocks L1 and L2 and four physical storage blocks P1, P2, P3 and P4. The usage flag 300 of each logical storage block L1, L2 is shown, as is the history value 402 of each physical storage block P1, P2, P3, P4. The system has been initialized according to the process depicted in Fig. 6 of the present application, and accordingly, logical storage block L1 is mapped to physical storage block P1, and logical storage block L2 is mapped to physical storage block P2. Because no data has been stored, the usage flag 300 of each of logical storage blocks L1 and L2 is set to FALSE. As explained with reference to step S606 of Fig. 6, the history value 402 of the mapped physical storage blocks P1 and P2 is set to 1, and the history value 402 of the as-yet-unmapped physical storage blocks P3 and P4 is set to 0. The counter is initialized at CTR = 0.

Fig. 8B depicts the arrangement after a request is received from OS 200 to store data D1 in logical storage block L1. According to the process shown in Fig. 7, it is determined whether the physical storage block P1 which is mapped to logical storage block L1 is available for use by interrogating the usage flag 300. In this case, the usage flag was FALSE, as shown in Fig. 8A, which means that the physical storage block P1 is available for use. Accordingly, the data D1 is written to physical storage block P1, and its history value 402 is incremented from 1 to 2. The usage flag 300 of logical storage block L1 is changed to TRUE.

Fig. 8C depicts the arrangement after a further request is received from OS 200 to store data D2 in logical storage block L1. According to the process shown in Fig. 7, it is determined that the usage flag 300 of logical storage block L1 is TRUE, indicating that the physical storage block P1 which is currently mapped to logical storage block L1 is not available for use at the current time. Thus, the controller 104 then determines whether any physical storage blocks P1, P2, P3, P4 exist for which the history value 402 is less than or equal to the value of the counter. In this case, the value of the counter is zero, and the physical storage blocks P3 and P4 both have history value 402 of zero. Either may be selected, but for the sake of this example, let us say that physical storage block P3 is selected. Then, the controller 104 updates the mapping 106 such that logical storage block L1 is now mapped to physical storage block P3 (rather than P1).

The history value 402 of physical storage block P3 is then incremented to 1, and the data D2 is written to physical storage block P3. The resulting arrangement is shown in Fig. 8C. It should be noted that data D1 remains stored on physical storage block P1. It is not overwritten simply because another request is made to write data D2 to the same logical storage block L1. Rather, a snapshot of the earlier data D1 remains on physical storage block P1, which may be recoverable in the event that the SSSD 100 is the victim of e.g. ransomware attack.

Fig. 8D depicts the arrangement after a further request is received from OS 200 to store data D3 in logical storage block L1. According to the process shown in Fig. 7, it is determined that the usage flag 300 of logical storage block L1 is TRUE, indicating that the physical storage block P3 which is currently mapped to logical storage block L1 is not available for use at the current time, because it is storing data D2. Thus, the controller 104 then determines whether any physical storage blocks P1, P2, P3, P4 exist for which the history value 402 is less than or equal to the value of the counter. In this case, the value of the counter is zero, and the physical storage block P4 has history value 402 of zero and is thus selected. Then, the controller 104 updates the mapping 106 such that logical storage block L1 is now mapped to physical storage block P4 (rather than P3). The history value 402 of physical storage block P4 is then incremented to 1, and the data D3 is written to physical storage block P4. The resulting arrangement is shown in Fig. 8D. As before, it is important to note that data D2 remains stored on physical storage block P3. At this point, a snapshot of older data D1 and D2 remains on physical storage blocks P1 and P3 respectively.

Fig. 8E depicts the arrangement after a request is received from OS 200 to store data D4 in logical storage block L2. According to the process shown in Fig. 7, it is determined whether the physical storage block P2 which is mapped to logical storage block L2 is available for use by interrogating the usage flag 300. In this case, the usage flag 300 was FALSE, as shown in Fig. 8D, which means that the physical storage block P2 is available for use. Accordingly, the data D4 is written to physical storage block P2, and its history value 402 is incremented from 1 to 2. The usage flag 300 of logical storage block L1 is changed to TRUE. The resulting arrangement is depicted in Fig. 8E. It will be appreciated that even though only two logical storage blocks L1 and L2 are available to the OS 200, the process of Fig. 7 means that all of the data D1, D2, D3, D4 remains stored on the SSSD 100, and is recoverable in the event of e.g. a ransomware attack.

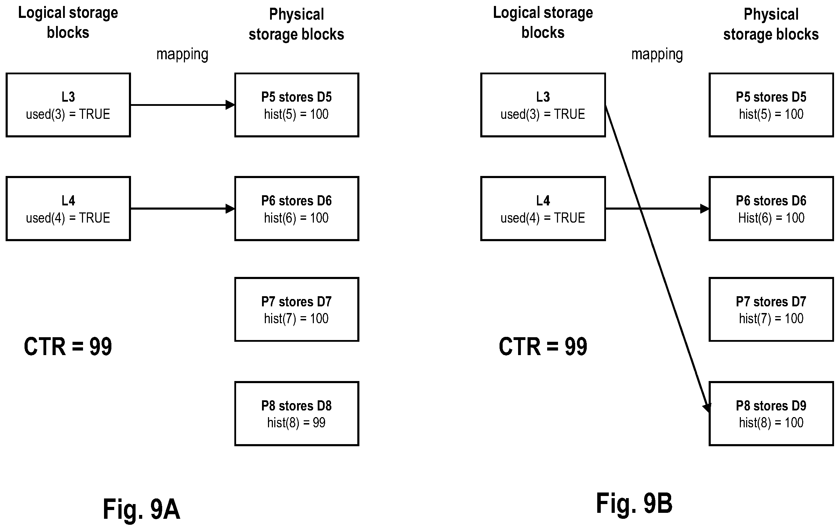

In Figs. 8A to 8E, there were always either unused logical storage blocks L1, L2, or physical storage blocks with history value 402 less than or equal to the value of the counter. We now explain, with reference to Figs. 9A to 9D, what happens in the event that there are no physical storage blocks P5, P6, P7, P8 having a history value 402 which is less than or equal to the value of the counter.

Fig. 9A shows an initial condition, entirely separate from the arrangement of Figs. 8A to 8E. In this scenario, the value of the counter is 99. Logical storage blocks L3 and L4 both have usage value TRUE. Logical storage block L3 is mapped to physical storage block P5, which has history value 402 of 100, and stores data D5. Logical storage block L4 is mapped to physical storage block P6, which has history value 402 of 100, and stores data D6. Physical storage block P7 is unmapped, has history value 402 of 100, and stores data D7. Physical storage block P8 is unmapped, has history value 402 of 99, and stores data D8.

Fig. 9B shows the arrangement after a further request is received from OS 200 to store data D9 in logical storage block L3. According to the process shown in Fig. 7, it is determined that the usage flag 300 of logical storage block L3 is TRUE, indicating that the physical storage block P5 which is currently mapped to logical storage block L3 is not available for use at the current time, because it is storing data D5. Thus, the controller 104 then determines whether any physical storage blocks P5, P6, P7, P8 exist for which the history value 402 is less than or equal to the value of the counter. In this case, the value of the counter is 99, and the physical storage block P8 has history value 402 of 99 and is thus selected. Then, the controller 104 updates the mapping 106 such that logical storage block L3 is now mapped to physical storage block P8 (rather than P5). The history value 402 of physical storage block P8 is then incremented to 100, and the data D9 is written to physical storage block P8, overwriting previous data D8. The resulting arrangement is shown in Fig. 9B. As before, it is important to note that data D5 remains stored on physical storage block P3. At this point, a snapshot of older data D5 on physical storage block P5.

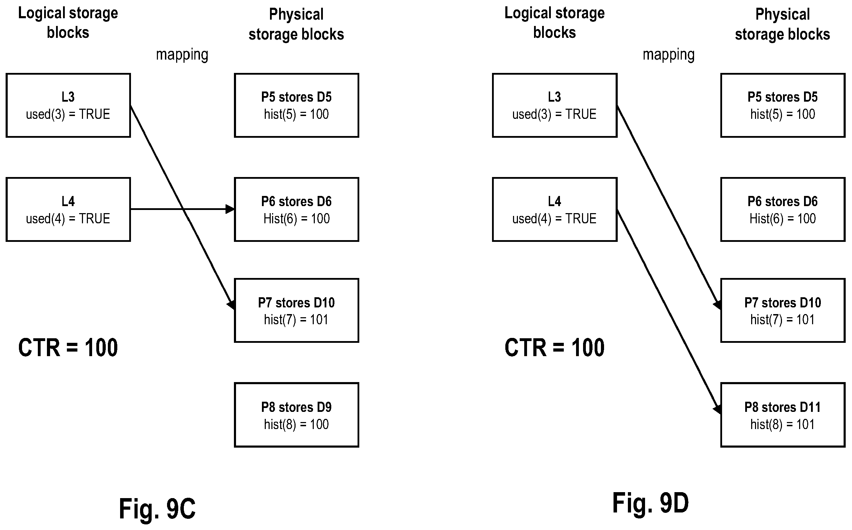

Fig. 9C shows the arrangement after a further request is received from OS 200 to store data D10 in logical storage block L3. According to the process shown in Fig. 7, it is determined that the usage flag 300 of logical storage block L3 is TRUE, indicating that the physical storage block P8 which is currently mapped to logical storage block L3 is not available for use at the current time, because it is storing data D9. Thus, the controller 104 then determines whether any physical storage blocks P5, P6, P7, P8 exist for which the history value 402 is less than or equal to the value of the counter. In this case, the value of the counter is 99, and the history value 402 of each of the physical storage blocks P5, P6, P7 and P8 is 100. Thus, no physical storage block P5, P6, P7, P8 has a history value 402 which is less than or equal to the value of the counter. The counter is therefore incremented by 1 to equal 100. At this point, each of the physical storage blocks P5, P6, P7, P8 has a history value 402 which is less than or equal to the value of the counter. Any may therefore validly be selected. Let us say that physical storage block P7 is selected. Then, the controller 104 updates the mapping 106 such that logical storage block L3 is now mapped to physical storage block P7 (rather than P8). The history value 402 of physical storage block P7 is then incremented to 101, and the data D10 is written to physical storage block P5, overwriting the previous data D7. The resulting arrangement is shown in Fig. 9C. As before, it is important to note that data D9 remains stored on physical storage block P8. At this point, a snapshot of older data D5 and D9 remain on physical storage blocks P5 and P9 respectively.

Fig. 9D shows the arrangement after a further request is received from OS 200 to store data D11 in logical storage block L4. According to the process shown in Fig. 7, it is determined that the usage flag 300 of logical storage block L3 is TRUE, indicating that the physical storage block P6 which is currently mapped to logical storage block L4 is not available for use at the current time, because it is storing data D6. Thus, the controller 104 then determines whether any physical storage blocks P5, P6, P7, P8 exist for which the history value 402 is less than or equal to the value of the counter. In this case, the value of the counter is 100, and the physical storage block P8 has a history value 402 of 100 and is thus selected. Then, the controller 104 updates the mapping 106 such that logical storage block L4 is now mapped to physical storage block P8 (rather than P6). The history value 402 of physical storage block P8 is then incremented to 101, and the data D11 is written to physical storage block P8, overwriting previous data D9. The resulting arrangement is shown in Fig. 9D.

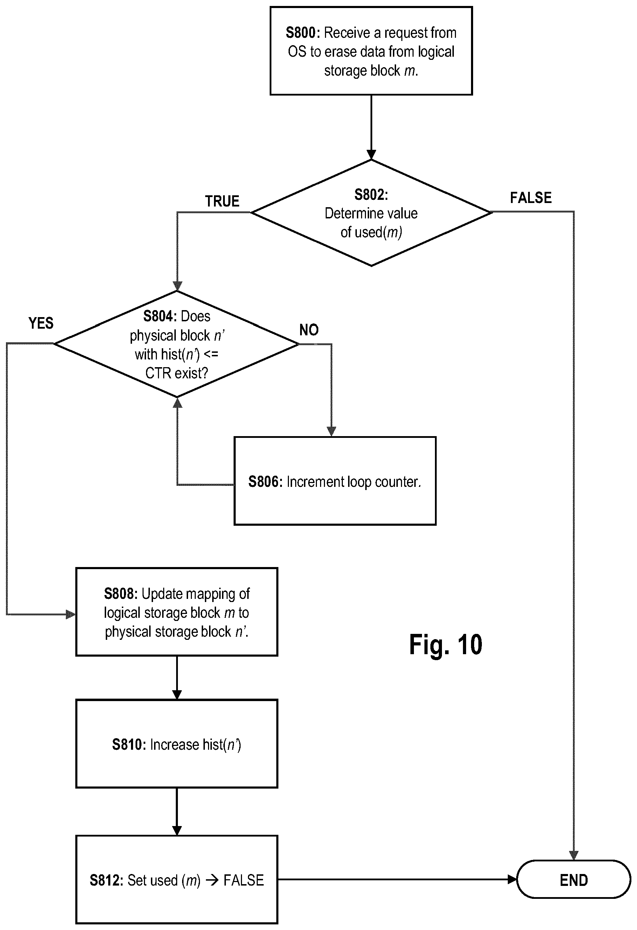

The preceding description relates to processes by which data may be written to the physical storage blocks $P_n$. We now discuss the manner in which logical storage blocks blocks $L_m$ may be freed for later use, if the physical storage block $P_n$ to which they are currently mapped already has data stored on it. The process is illustrated in the flowchart of Fig. 10.

In a first step S800, a request is received from the OS 200 to erase data $D$ from a logical storage block $L_m$. The OS 200 is only able to access information defining the logical storage blocks $L_m$, in order to provide a barrier between the OS 200 and the physical storage blocks 250 of the SSSD 100. In some cases, the specified logical storage block $L_m$ may already be empty (or in a state where new data can be written to it), and in other cases, the physical storage block $P_n$ corresponding to the specific logical storage block $L_m$ may already contain data. The process proceeds differently depending on which state the specified logical storage block $L_m$ is in. Accordingly, in step S802, the value of the usage flag 300 of the specified logical storage block $L_m$ is determined, e.g. by the controller 104. This may be done by interrogating the usage flag 300 of the specified logical storage block $L_m$ in order to ascertain the value of used($m$), where $m$ is the index of the logical storage block $L_m$. If it is determined that the logical storage block $L_m$ is not in use, i.e. that:

$$used(m) = FALSE$$

the method ends, since there is no data to erase.

When it is determined that the usage flag 300 of the logical storage block $L_m$ is TRUE, in step S804, a further determination takes place by the controller 104, namely whether any physical storage block $P_{n'}$ exists with a history value 402 which is less than or equal to the value of the counter at that point. If it is determined that no such physical storage block $P_{n'}$ exists, the process proceeds to step S806, in which the value of the counter is incremented by 1, and the process returns to the determination in step S804. Essentially, this process is iterated until a physical storage block $P_{n'}$ exists with a history value 402 which is less than the value of the counter. It is straightforward to comprehend that this condition must eventually be met since the value of the counter is incremented, while none of the history values 402 change, so at some point, the value of the counter must exceed the lowest history value 402 of all of the physical storage blocks $P_m$. When the determination in step S804 is positive, the process proceeds to step S808, in which the mapping 106 is updated such that the logical storage block $L_m$ which formed the subject of the request in step S700 is mapped to $P_{n'}$ (i.e. rather than $P_n$). This may be denoted:

$$\mathrm{map}(m) = n \rightarrow = n'$$

After the mapping has been updated, in step S808, the history value 402 of the new physical storage block $P_{n'}$ is incremented by 1 in step S810. Generally, the history value 402 of the physical storage block $P_{n'}$, or hist($n'$) increases from $k$ to $k + 1$.

Then, after the mapping 106 and the history value 402 have been updated, the usage flag 300 of the logical storage block $L_m$ is updated to FALSE, such that when further requests are received to write data to the logical storage block $L_m$, in step S702 of Fig. 7, the determination will be positive.

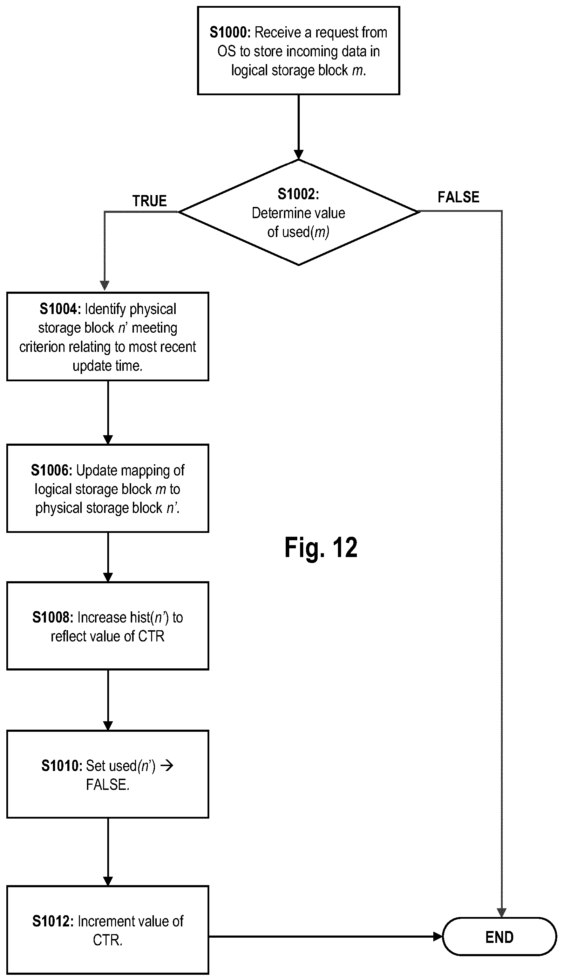

Figs. 7 to 10 relate primarily to implementations in which the physical storage block is $n'$ is identified on the basis of a number of times which it has previously been updated. In other cases, the criterion used to select the physical storage block n' is based on a most recent time at which it was updated. These are depicted in Figs. 11 and 12, described below. In these examples, the value of the counter is incremented every time a physical storage block is updated, and therefore provides an effective measure of time, and ensures that the order of the history values represents the chronological order in which the physical storage blocks are updated. This is in contrast to the previous examples in which the value of the counter represents the history value of the physical storage block which has been updated the greatest number of times.

Fig. 11 is a flowchart illustrating a process for writing new data D to the SSSD 100. In a first step S900, a request is received from the OS 200 to store incoming data D to a logical storage block $L_m$. The OS 200 is only able to access information defining the logical storage

blocks $L_m$, in order to provide a barrier between the OS 200 and the physical storage blocks 250 of the SSSD 100. In some cases, the specified logical storage block $L_m$ may be empty (or in a state where new data can be written to it), and in other cases, the physical storage block $P_n$ corresponding to the specified logical storage block $L_m$ may already contain data. The process proceeds differently depending on which state the specified logical storage block $L_m$ is in. Accordingly, in step S902, the usage flag 300 of the specified logical storage block $L_m$ is determined, e.g. by the controller 104. This may be done by interrogating the usage flag 300 of the specified logical storage block $L_m$ in order to ascertain the value of used($m$), where m is the index of the logical storage block $L_m$. If it is determined that the logical storage block $L_m$ is not in use, i.e. that:

$$\mathrm{used}(m) = \mathrm{FALSE}$$

the method proceeds to step S904, in which the controller 104 determines, using the mapping 106, the physical storage block $P_n$ which corresponds to the logical storage block $L_m$. The index $n$ of the physical storage block $P_n$ which corresponds to the index $m$ of the logical storage block $L_m$ may be represented as:

$$n = \mathrm{map}(m)$$

Having determined the appropriate physical storage block $P_n$, the controller 104 then causes the data D to be written to that physical storage block $P_n$. Once the data has been written to the physical storage block $P_n$, in step S906, the history value 402 of the physical storage block $P_n$ is incremented to reflect the value of the counter at that time. This effectively provides an indication that the physical storage block $P_n$ has been "used" a further time, and provides an indication of the time at which the update took place. Having written the data $D$ to the physical storage block $P_n$ and increased its history value 402, in step S908, the usage flag 300 of the physical storage block $P_n$ is changed to TRUE. This indicates to the controller 104, in subsequent operations, that there is data written to the physical storage block $P_n$, and therefore that it is unavailable for immediate subsequent use. Then, in step S910, the value of the counter is incremented by 1. Alternatively, the value of the counter may be updated to represent an absolute time, but an increment by 1 each time a block is updated is sufficient to ensure that the history values correspond to a chronological order of updates.

If it is determined in step S902 that the usage value of the local block $L_m$ is TRUE, i.e. if:

$$\mathrm{used}(m) = \mathrm{TRUE}$$

the method proceeds to step S912, in which a physical storage block $P_n$ meeting a criterion corresponding to a most recent update time is identified. As explained earlier in respect of the implementations of Figs. 11 and 12, the history values of the physical storage blocks $P_n$ represent a value of the counter at the point when the physical storage blocks $P_n$ were most recently updated. Since the counter is incremented each time *any* physical storage block is updated, the history values essentially represent a chronological order in which the physical storage blocks $P_n$ were updated, where the highest history values represent the most recent updates, and the lowest history values represents the least recent updates. Thus, in step S912, the physical storage block $P_{n'}$ which is identified may be the physical storage block $P_{n'}$ which has the lowest history value, corresponding to the "oldest" update. Other criteria may also be applied, as explained earlier in this disclosure.

The process then proceeds to step S914, in which the mapping 106 is updated such that the logical storage block $L_m$ which formed the subject of the request in step S700 is mapped to $P_{n'}$ (i.e. rather than $P_n$). This may be denoted:

$$\texttt{map}(m) \;=\; n \;\rightarrow\; = \; n'$$

After the mapping has been updated, in step S916, the history value 402 of the new physical storage block $P_{n'}$ is incremented in step S716 to reflect the value of the counter at that time. Then, after the mapping 106 has been updated, and the history value 402 incremented, in step S918, the incoming data $D$ is written to the block $P_{n'}$. It is useful to consider what the effect of this is. It will be noted that no data has been erased or overwritten from the earlier block $P_n$. Rather, the mapping 106 has been updated, and the data has been written to a block which has either not been used, or has not been used for the longest time. This means that the earlier data remains stored on a physical storage block $P_n$ of the SSSD 100, essentially forming a backup. Finally, in step S920, the value of the counter is incremented by 1.

It should be noted that steps S916 to S918 may be performed in any order, and any two or all three may be performed in parallel. The counter will still represent a valid measure of time as long as the order remains constant.

The preceding description relates to processes by which data may be written to the physical storage blocks $P_n$. We now discuss the manner in which logical storage blocks blocks $L_m$ may be freed for later use, if the physical storage block $P_n$ to which they are currently mapped already has data stored on it. The process is illustrated in the flowchart of Fig. 12.

In a first step S1000, a request is received from the OS 200 to store incoming data $D$ to a logical storage block $L_m$. The OS 200 is only able to access information defining the logical storage blocks $L_m$, in order to provide a barrier between the OS 200 and the physical storage blocks 250 of the SSSD 100. In some cases, the specified logical storage block $L_m$ may be empty (or in a state where new data can be written to it), and in other cases, the physical storage block $P_n$ corresponding to the specified logical storage block $L_m$ may already contain data. The process proceeds differently depending on which state the specified logical storage block $L_m$ is in. Accordingly, in step S902, the usage flag 300 of the specified logical storage block $L_m$ is determined, e.g. by the controller 104. This may be done by interrogating the usage flag 300 of the specified logical storage block $L_m$ in order to ascertain the value of used($m$), where $m$ is the index of the logical storage block $L_m$. If it is determined that the logical storage block $L_m$ is not in use, i.e. that:

$$\texttt{used}(m) \;=\; \texttt{FALSE}$$

the method ends, since there is no data to erase.

If it is determined in step S1002 that the usage value of the local block $L_m$ is TRUE, i.e. if:

$$\texttt{used}(m) \;=\; \texttt{TRUE}$$

the method proceeds to step S1004, in which a physical storage block $P_n$ meeting a criterion corresponding to a most recent update time is identified. As explained earlier in respect of the implementations of Figs. 11 and 12, the history values of the physical storage blocks $P_n$ represent a value of the counter at the point when the physical storage blocks $P_n$ were most recently updated. Since the counter is incremented each time *any* physical storage block is updated, the history values essentially represent a chronological order in which the physical storage blocks $P_n$ were updated, where the highest history values represent the most recent updates, and the lowest history values represents the least recent updates. Thus, in step S912, the physical storage block $P_{n'}$ which is identified may be the physical storage block $P_{n'}$ which has the lowest history value, corresponding to the "oldest" update. Other criteria may also be applied, as explained earlier in this disclosure.

The process then proceeds to step S1004, in which the mapping 106 is updated such that the logical storage block $L_m$ which formed the subject of the request in step S700 is mapped to $P_{n'}$ (i.e. rather than $P_n$). This may be denoted:

$$\texttt{map}(m) \;=\; n \;\rightarrow\; = \; n'$$

After the mapping has been updated, in step S1008, the history value 402 of the new physical storage block $P_{n'}$ is incremented in step S716 to reflect the value of the counter at that time. Then, after the mapping 106 has been updated, and the history value 402 incremented, in step S1010, the usage flag 300 of the logical storage block $L_m$ is updated to FALSE, such that when further requests are received to write data to the logical storage block $L_m$, in step S902 of Fig. 11, the determination will be positive. Finally, in step S1012, the value of the counter is incremented by 1.

It should be noted that steps S1008 to S1012 may be performed in any order, and any two or all three may be performed in parallel. The counter will still represent a valid measure of time as long as the order remains constant. The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

One embodiment may be as follows:

A data processing component for controlling storage of data to a solid-state storage device comprising a plurality of N physical storage blocks, each physical storage block storing a respective history value indicative of a most recent time at which that physical storage block was updated and/or the number of times that that physical storage block has been updated, the data processing component comprising a controller and a memory, wherein:

the memory stores a mapping between a plurality of M logical storage blocks accessible by an operating system of a computing device and a respective physical storage block of the plurality of N physical storage blocks;

and the controller is configured, in response to receiving a request from the operating system to store incoming data in a first specified logical storage block which is mapped to a first physical storage block, to execute a method comprising:

determining that the first specified logical storage block is unavailable for the storage of incoming data;, and

in response to determining that the first specified logical storage block is unavailable for the storage of incoming data:

identifying a second physical storage block of the plurality of N physical storage blocks, based on a history value of the second physical block; and

storing the incoming data in the second physical storage block, and updating the history value of the second physical storage block.

## Claims

1. A data processing component for controlling storage of data to a solid-state storage device comprising a plurality of *N* physical storage blocks, the data processing component comprising a controller and a memory, wherein:

the memory stores a mapping between a plurality of *M* logical storage blocks accessible by an operating system of a computing device and a respective physical storage block of the plurality of *N* physical storage blocks; and the controller is configured, in response to receiving a request from the operating system to store incoming data in a first specified logical storage block which is mapped to a first physical storage block, to execute a method comprising:

determining that the first specified logical storage block is unavailable for the storage of incoming data; and in response to determining that the first specified logical storage block is unavailable for the storage of incoming data:
identifying a second physical storage block of the plurality of *N* physical storage blocks for storage of the incoming data, based on a history value of the second physical storage block, the history value indicative of a most recent time at which that physical storage block was updated and/or a number of times that physical storage block has been updated.

2. The data processing component of claim 1 wherein each physical storage block stores a respective history value indicative of a most recent time at which that physical storage block was updated and/or the number of times that the physical storage block has been updated.

3. The data processing component of claim 1 or claim 2, further comprising:

   storing the incoming data in the second physical storage block and/or
   updating the history value of the second physical storage block.

4. The data processing component of any one of claims 1 to 3, wherein:

   the number of logical storage blocks *M* is less than the number of physical storage blocks *N*, and, preferably, the value of *N* is at least double the value of *M*.

5. The data processing component of any one of claims 1 to 4, further comprising:
   updating the mapping to associate the first specified logical storage block with the second physical storage block.

6. The data processing component of any one of claims 1 to 5, wherein identifying the second physical storage block comprises:

   determining, for each of the plurality of physical storage blocks or a subset thereof, a respective time at which that physical storage block was most recently updated, based on the respective history values of the plurality of physical storage blocks or subset thereof; and
   one or more of:

   identifying a physical storage block of the plurality of physical storage blocks or subset thereof which has been updated the least recently or has not been used for the storage of data;
   identifying a physical storage block of the plurality of physical storage blocks or subset thereof which was most recently updated longer ago than a predetermined threshold interval;
   identifying a physical storage block of the plurality of physical storage blocks or subset thereof which was most recently updated before a predetermined time threshold; and
   ranking the plurality of physical storage blocks or subset thereof based on the determined times, and selecting a physical storage block based on a threshold ranking or percentile.

7. The data processing component of any one of claims 1 to 6, wherein:

   the controller comprises a counter;
   the history value of each respective physical storage block of the plurality of physical storage blocks is indicative of a most recent time at which that physical storage block was updated; and either:

   the controller is configured to increment the counter each time any physical storage block of the plurality of physical storage blocks is updated; or
   the controller is configured to increment the counter at predetermined regular intervals; and

   each time a physical storage block is updated, its history value is updated to reflect the value of the counter at that time.

8. The data processing component of any one of claims 1 to 5, wherein:

   the history value of each respective physical storage block is indicative of the number of times that physical storage block has been updated; and
   identifying the second physical storage block of the plurality of physical storage blocks comprises identifying the physical storage block with the lowest history value.

9. The data processing component of claim 8, wherein:
   the controller is configured to increment the history value of the second physical storage block either after the mapping has been updated to associate the first specified logical storage block with the second physical storage block, or after the incoming data has been stored in the second physical storage block.

10. The data processing component of any one of claims 1 to 9, wherein:
each logical storage block comprises or has associated therewith an availability flag which comprises a value indicative of whether that logical storage block is available for storage of incoming data.

11. The data processing component of claim 10, wherein:
in response to a request to erase data from a second specified logical storage block which is mapped to a third physical storage block of the plurality of physical storage blocks, the controller is configured to:

identify a fourth physical storage block of the plurality of physical storage blocks based on a history value of the fourth physical storage block;
update the mapping to associate the second specified logical storage block with the fourth physical storage block;
update the history value of the fourth physical storage block; and
label the second specified logical storage block as available for storage of incoming data.

12. The data processing component of claim 11, wherein:
the controller is configured to label the second specified logical storage block as available for storage of incoming data by updating a value of the availability flag.

13. The data processing component of any one of claims 1 to 12, wherein:
the data processing component is configured to prevent direct access to the plurality of N physical storage blocks by the operating system of the computing device, such that the operating system of the computing device is only able to access a solid-state storage device of size M blocks.

14. The data processing component of any one of claims 1 to 13, further comprising:
a switch which is configured to switch the data processing component between a secured state in which the physical storage blocks are inaccessible to the operating system of the computing device and an unsecured state in which the physical storage blocks are accessible to the operating system of the computing device.

15. The data processing component of any one of claims 1 to 14, wherein:
the data processing component is implemented in the form of a chip, disc, or other hardware component locatable within a solid-state storage device.

16. A solid-state storage device comprising:

a plurality of N physical storage blocks; and
the data processing component of any one of claims 1 to 15.

**Patentansprüche**

1. Datenverarbeitungskomponente zum Steuern der Speicherung von Daten in einer Festkörperspeichervorrichtung umfassend eine Vielzahl von N physischen Speicherblöcken, wobei die Datenverarbeitungskomponente eine Steuereinheit und einen Speicher umfasst, wobei:

der Speicher eine Zuordnung zwischen einer Vielzahl von M logischen Speicherblöcken, auf die von einem Betriebssystem eines Computergeräts zugegriffen werden kann, und einem jeweiligen physischen Speicherblock der Vielzahl von N physischen Speicherblöcken speichert; und die Steuereinheit konfiguriert ist, als Reaktion auf den Empfang einer Anforderung vom Betriebssystem, eingehende Daten in einem ersten angegebenen logischen Speicherblock, der einem ersten physischen Speicherblock zugeordnet ist, zu speichern, ein Verfahren auszuführen umfassend:

Feststellen, dass der erste angegebene logische Speicherblock für die Speicherung eingehender Daten nicht verfügbar ist; und als Reaktion auf die Feststellung, dass der erste angegebene logische Speicherblock für die Speicherung eingehender Daten nicht verfügbar ist:

Identifizieren eines zweiten physischen Speicherblocks aus der Vielzahl von N physischen Speicherblöcken für die Speicherung der eingehenden Daten, basierend auf einem Verlaufswert des zweiten physischen Speicherblocks, wobei der Verlaufswert einen letzten Zeitpunkt angibt, zu dem dieser physische Speicherblock aktualisiert wurde, und/oder eine Anzahl von Aktualisierungen dieses physischen Speicherblocks.

2. Datenverarbeitungskomponente nach Anspruch 1, wobei jeder physische Speicherblock einen jeweiligen Verlaufswert speichert, der einen letzten Zeitpunkt angibt, zu dem dieser physische Speicherblock aktualisiert wurde, und/oder die Anzahl der Aktualisierungen dieses physischen Speicherblocks.

3. Datenverarbeitungskomponente nach Anspruch 1 oder Anspruch 2 ferner umfassend:

Speichern der eingehenden Daten in dem zweiten physischen Speicherblock und/oder Aktualisieren des Verlaufswerts des zweiten physischen Speicherblocks.

4. Datenverarbeitungskomponente nach einem der Ansprüche 1 bis 3, wobei:

die Anzahl der logischen Speicherblöcke $M$ kleiner ist als die Anzahl der physischen Speicherblöcke $N$, und vorzugsweise der Wert von $N$ mindestens doppelt so groß ist wie der Wert von $M$.

5. Datenverarbeitungskomponente nach einem der Ansprüche 1 bis 4 ferner umfassend:
Aktualisieren der Zuordnung, um den ersten angegebenen logischen Speicherblock mit dem zweiten physischen Speicherblock zu verknüpfen.

6. Datenverarbeitungskomponente nach einem der Ansprüche 1 bis 5, wobei das Identifizieren des zweiten physischen Speicherblocks umfasst:

Feststellen für jeden der Vielzahl von physischen Speicherblöcken oder einer Teilmenge davon eines jeweiligen Zeitpunkts, zu dem dieser physische Speicherblock zuletzt aktualisiert wurde, basierend auf den jeweiligen Verlaufswerten der Vielzahl von physischen Speicherblöcken oder einer Teilmenge davon; und eines oder mehr von:

Identifizieren eines physischen Speicherblocks aus der Vielzahl der physischen Speicherblöcke oder einer Teilmenge davon, der am wenigsten kürzlich aktualisiert wurde oder nicht für die Speicherung von Daten verwendet wurde; Identifizieren eines physischen Speicherblocks aus der Vielzahl von physischen Speicherblöcken oder einer Teilmenge davon, der zuletzt vor länger als einem vorbestimmten Schwellenintervall aktualisiert wurde; Identifizieren eines physischen Speicherblocks aus der Vielzahl von physischen Speicherblöcken oder einer Teilmenge davon, der zuletzt vor einer vorbestimmten Zeitschwelle aktualisiert wurde; und Einstufen der Vielzahl von physischen Speicherblöcken oder einer Teilmenge davon basierend auf den festgestellten Zeitpunkten und Auswählen eines physischen Speicherblocks basierend auf einer Schwelleneinstufung oder einem Perzentil.

7. Datenverarbeitungskomponente nach einem der Ansprüche 1 bis 6, wobei:

die Steuereinheit einen Zähler umfasst; der Verlaufswert jedes jeweiligen physischen Speicherblocks der Vielzahl physischer Speicherblöcke einen Zeitpunkt angibt, zu dem dieser physische Speicherblock zuletzt aktualisiert wurde; und entweder:

die Steuereinheit konfiguriert ist, den Zähler jedes Mal zu erhöhen, wenn ein physischer Speicherblock der Vielzahl physischer Speicherblöcke aktualisiert wird; oder die Steuereinheit konfiguriert ist, den Zähler in vorbestimmten regelmäßigen Intervallen zu erhöht; und jedes Mal, wenn ein physischer Speicherblock aktualisiert wird, sein Verlaufswert aktualisiert wird, um den Wert des Zählers zu diesem Zeitpunkt widerzuspiegeln.

8. Datenverarbeitungskomponente nach einem der Ansprüche 1 bis 5, wobei:

der Verlaufswert jedes jeweiligen physischen Speicherblocks die Anzahl der Aktualisierungen dieses physischen Speicherblocks angibt; und das Identifizieren des zweiten physischen Speicherblocks der Vielzahl von physischen Speicherblöcken das Identifizieren des physischen Speicherblocks mit dem niedrigsten Verlaufswert umfasst.

9. Datenverarbeitungskomponente nach Anspruch 8, wobei:
die Steuereinheit konfiguriert ist, den Verlaufswert des zweiten physischen Speicherblocks entweder nachdem die Zuordnung aktualisiert wurde, um den ersten angegebenen logischen Speicherblock mit dem zweiten physischen Speicherblock zu verknüpfen, oder nachdem die eingehenden Daten im zweiten physischen Speicherblock gespeichert wurden, zu erhöhen.

10. Datenverarbeitungskomponente nach einem der Ansprüche 1 bis 9, wobei:
jeder logische Speicherblock ein Verfügbarkeitsflag umfasst oder mit diesem verknüpft ist, das einen Wert umfasst, der angibt, ob dieser logische Speicherblock für die Speicherung eingehender Daten verfügbar ist.

11. Datenverarbeitungskomponente nach Anspruch 10, wobei:

als Reaktion auf eine Anforderung zum Löschen von Daten aus einem zweiten angegebenen logischen Speicherblock, der einem dritten physischen Speicherblock der Vielzahl von physischen Speicherblöcken zugeordnet ist, die Steuereinheit konfiguriert ist:

einen vierten physischen Speicherblock aus der Vielzahl von physischen Speicherblöcken basierend auf einem Verlaufswert des vierten physischen Speicherblocks zu identifizieren; die Zuordnung zu aktualisiert, um den zweiten angegebenen logischen Speicherblock mit dem vierten physischen Speicherblock zu verknüpfen; den Verlaufswert des vierten physischen Speicherblocks zu aktualisieren; und den zweiten angegebenen logischen Speicherblock als verfügbar für die Speicherung eingehender Daten zu kennzeichnen.

**12.** Datenverarbeitungskomponente nach Anspruch 11, wobei:
die Steuereinheit konfiguriert ist, den zweiten angegebenen logischen Speicherblock als verfügbar für die Speicherung eingehender Daten zu kennzeichnen, indem sie einen Wert des Verfügbarkeitsflags aktualisiert.

**13.** Datenverarbeitungskomponente nach einem der Ansprüche 1 bis 12, wobei:
die Datenverarbeitungskomponente konfiguriert ist, den direkten Zugriff auf die Vielzahl von $N$ physischen Speicherblöcken durch das Betriebssystem des Computergeräts zu verhindern, sodass das Betriebssystem des Computergeräts nur in der Lage ist, auf eine Festkörperspeichervorrichtung mit einer Größe von $M$ Blöcken zuzugreifen.

**14.** Datenverarbeitungskomponente nach einem der Ansprüche 1 bis 13, ferner umfassend:
einen Schalter, der konfiguriert ist, die Datenverarbeitungskomponente zwischen einem gesicherten Zustand, in dem auf die physischen Speicherblöcke von dem Betriebssystem des Computergeräts nicht zugegriffen werden kann, und einem ungesicherten Zustand, in dem auf die physischen Speicherblöcke von dem Betriebssystem des Computergeräts zugegriffen werden kann, umzuschalten.

**15.** Datenverarbeitungskomponente nach einem der Ansprüche 1 bis 14, wobei:
die Datenverarbeitungskomponente in Form eines Chips, einer Disc oder einer anderen Hardwarekomponente implementiert ist, die innerhalb einer Festkörperspeichervorrichtung angeordnet werden kann.

**16.** Festkörperspeichervorrichtung umfassend:

eine Vielzahl von N physischen Speicherblöcken; und
die Datenverarbeitungskomponente nach einem der Ansprüche 1 bis 15.

**Revendications**

**1.** Composant de traitement de données destiné à commander un stockage de données sur un dispositif de stockage à l'état solide comprenant une pluralité de $N$ blocs de stockage physiques, le composant de traitement de données comprenant un contrôleur et une mémoire, dans lequel :

la mémoire stocke un mappage entre une pluralité de $M$ blocs de stockage logiques accessibles par un système d'exploitation d'un dispositif de calcul et un bloc de stockage physique respectif de la pluralité de $N$ blocs de stockage physiques ; et
le contrôleur est configuré, en réponse à la réception d'une requête, provenant du système d'exploitation, de stockage des données entrantes dans un premier bloc de stockage logique spécifié qui est mappé avec un premier bloc de stockage physique, pour exécuter un procédé comprenant les étapes consistant à :

déterminer que le premier bloc de stockage logique spécifié n'est pas disponible pour le stockage de données entrantes ; et
en réponse à la détermination selon laquelle le premier bloc de stockage logique spécifié n'est pas disponible pour le stockage de données entrantes :
identifier un deuxième bloc de stockage physique de la pluralité de $N$ blocs de stockage physiques pour un stockage des données entrantes, sur la base d'une valeur d'historique du deuxième bloc de stockage physique, la valeur d'historique indiquant un temps le plus récent auquel ce bloc de stockage physique a été mis à jour et/ou un nombre de fois où ce bloc de stockage physique a été mis à jour.

**2.** Composant de traitement de données selon la revendication 1, dans lequel chaque bloc de stockage physique stocke une valeur d'historique respective indiquant un temps le plus récent auquel ce bloc de stockage physique a été mis à jour et/ou le nombre de fois où ce bloc de stockage physique a été mis à jour.

**3.** Composant de traitement de données selon la revendication 1 ou 2, comprenant en outre l'opération consistant à :

stocker les données entrantes dans le deuxième bloc de stockage physique et/ou mettre à jour la valeur d'historique du deuxième bloc de stockage physique.

4. Composant de traitement de données selon l'une quelconque des revendications 1 à 3, dans lequel : le nombre $M$ de blocs de stockage logiques est inférieur au nombre $N$ de blocs de stockage physiques, et, de préférence, la valeur de $N$ est au moins le double de la valeur de $M$.

5. Composant de traitement de données selon l'une quelconque des revendications 1 à 4, comprenant en outre l'opération consistant à : mettre à jour le mappage pour associer le premier bloc de stockage logique spécifié au deuxième bloc de stockage physique.

6. Composant de traitement de données selon l'une quelconque des revendications 1 à 5, dans lequel l'identification du deuxième bloc de stockage physique comprend de :

déterminer, pour chacun de la pluralité de blocs de stockage physiques ou d'un sous-ensemble de ceux-ci, un temps respectif auquel ce bloc de stockage physique a été mis à jour le plus récemment, sur la base des valeurs d'historique respectives de la pluralité de blocs de stockage physiques ou d'un sous-ensemble de ceux-ci ; et

une ou plusieurs opérations parmi les suivantes :

identifier un bloc de stockage physique de la pluralité de blocs de stockage physiques ou d'un sous-ensemble de ceux-ci, qui a été mis à jour le moins récemment ou qui n'a pas été utilisé pour le stockage de données ;
identifier un bloc de stockage physique de la pluralité de blocs de stockage physiques ou d'un sous-ensemble de ceux-ci, qui a été mis à jour le plus récemment il y a plus longtemps qu'un intervalle seuil prédéterminé ;
identifier un bloc de stockage physique de la pluralité de blocs de stockage physique ou d'un sous-ensemble de ceux-ci, qui a été mis à jour le plus récemment avant un temps seuil prédéterminé ; et
classer la pluralité de blocs de stockage physiques ou un sous-ensemble de ceux-ci sur la base des temps déterminés, et sélectionner un bloc de stockage physique sur la base d'un classement ou pourcentage seuil.

7. Composant de traitement de données selon l'une quelconque des revendications 1 à 6, dans lequel :

le contrôleur comprend un compteur ;
la valeur d'historique de chaque bloc de stockage physique respectif de la pluralité de blocs de stockage physiques indique un temps le plus récent auquel ce bloc de stockage physique a été mis à jour ; et
soit :

le compteur est configuré pour incrémenter le compteur chaque fois qu'un bloc de stockage physique quelconque de la pluralité de blocs de stockage physiques est mis à jour ;
soit :

le contrôleur est mis à jour pour incrémenter le compteur à intervalles réguliers prédéterminés ; et
chaque fois qu'un bloc de stockage physique est mis à jour, la valeur d'historique de celui-ci est mise à jour pour refléter la valeur du compteur à ce temps-ci.

8. Composant de traitement de données selon l'une quelconque des revendications 1 à 5, dans lequel :

la valeur d'historique de chaque bloc de stockage physique respectif indique le nombre de fois où ce bloc de stockage physique a été mis à jour ; et
l'identification du deuxième bloc de stockage physique de la pluralité de blocs de stockage physiques comprend d'identifier le bloc de stockage physique avec la valeur d'historique la plus basse.

9. Composant de traitement de données selon la revendication 8, dans lequel : le contrôleur est configuré pour incrémenter la valeur d'historique du deuxième bloc de stockage physique soit après mise à jour du mappage pour associer le premier bloc de stockage logique spécifié au deuxième bloc de stockage physique, soit après stockage des données entrantes dans le deuxième bloc de stockage physique.

10. Composant de traitement de données selon l'une quelconque des revendications 1 à 9, dans lequel : chaque bloc de stockage logique comprend ou a, associé à celui-ci, un drapeau de disponibilité qui comprend une valeur indiquant si ce bloc de stockage logique est ou n'est pas disponible pour un stockage de données entrantes.

11. Composant de traitement de données selon la revendication 10, dans lequel :
en réponse à une requête d'effacement des données d'un deuxième bloc de stockage logique spécifié qui est mappé avec un troisième bloc de stockage physique de la pluralité de blocs de stockage physiques, le contrôleur est configuré pour :

identifier un quatrième bloc de stockage physique de la pluralité de blocs de stockage physiques sur la base d'une valeur d'historique du quatrième bloc de stockage physique ;
mettre à jour le mappage pour associer le second bloc de stockage logique spécifié au quatrième bloc de stockage physique ;
mettre à jour la valeur d'historique du quatrième bloc de stockage physique ; et
marquer le second bloc de stockage logique spécifié comme disponible pour un stockage de données entrantes.

12. Composant de traitement de données selon la revendication 11, dans lequel :
le contrôleur est configuré pour marquer le second bloc de stockage logique spécifié comme disponible pour un stockage de données entrantes en mettant à jour une valeur du drapeau de disponibilité.

13. Composant de traitement de données selon l'une quelconque des revendications 1 à 12, dans lequel :
le composant de traitement de données est configuré pour empêcher un accès direct à la pluralité de $N$ blocs de stockage physiques par le système d'exploitation du dispositif de calcul, de telle sorte que le système d'exploitation du dispositif de calcul est uniquement capable d'accéder à un dispositif de stockage à l'état solide d'une taille de $M$ blocs.

14. Composant de traitement de données selon l'une quelconque des revendications 1 à 13, comprenant en outre :
un commutateur qui est configuré pour commuter le composant de traitement de données entre un état sécurisé dans lequel les blocs de stockage physiques ne sont pas accessibles au système d'exploitation du dispositif de calcul, et un état non sécurisé dans lequel les blocs de stockage physiques sont accessibles au système d'exploitation du dispositif de calcul.

15. Composant de traitement de données selon l'une quelconque des revendications 1 à 14, dans lequel :
le composant de traitement de données est mis en œuvre sous forme de puce, de disque ou d'un autre composant matériel pouvant être placé à l'intérieur d'un dispositif de stockage à l'état solide.

16. Dispositif de stockage l'état solide comprenant :

une pluralité de $N$ blocs de stockage physiques ; et
le composant de traitement de données selon l'une quelconque des revendications 1 à 15.

Solid state storage device 100

OS interface module 102

Controller 104

Mapping 106

**PHYSICAL STORAGE BLOCKS 150**

Operating system 200

## Fig. 1

OPERATING SYSTEM

$L_1$

$L_2$

$L_3$

$L_{M-1}$

$L_M$

**Logical storage blocks**

$P_1$

$P_2$

$P_3$

$P_{N-3}$

$P_{N-2}$

$P_{N-1}$

$P_N$

**Physical storage blocks**

# Fig. 2

**Logical storage block $L_m$**

Usage flag 300

# Fig. 3

**Physical storage block $P_n$**

History value 402

Payload 404

# Fig. 4

S500: Receive a request to store incoming data in logical storage block *m*.

S504: Determining that physical block *n* is already in use.

S506: Identifying a different physical storage block *n'*

S508: Updating the mapping to associate logical storage block *m* with physical storage block *n'*.

S510: Storing the incoming data in physical storage block *n'*.

# Fig. 5

**S600**: Set value of loop counter to zero.

**S602:** Set map*(m)* = *m* for all logical blocks from 1 to *M.*

**S604:** Set used*(m)* = FALSE for all logical blocks from 1 to *M.*

**S606:** Set hist*(n)* = 1 for all physical blocks from 1 to *M*, and set hist*(n)* = 0 for all physical blocks from *M*+1 to N

# Fig. 6

**S700:** Receive a request from OS to store incoming data in logical storage block *m*.

**S702:** Determine value of used(*m*)

TRUE

FALSE

**S710:** Does physical block *n'* with hist(*n'*) <= CTR exist?

YES

NO

**S704:** Write data to physical storage block *n* which is mapped to logical storage block *m*.

**S712:** Increment loop counter.

**S706:** Increment hist(*n*).

**S714:** Update mapping of logical storage block *m* to physical storage block *n'*.

**Fig. 7**

**S708:** Set used(*m*) → TRUE

**S716:** Increase hist(*n'*)

**S718:** Write the data in physical storage block *n'*.

END

Logical storage blocks

mapping

Physical storage blocks

| L1 |
| used(1) = FALSE |

→

| P1 |
| hist(1) = 1 |

| L2 |
| used(2) = FALSE |

→

| P2 |
| hist(2) = 1 |

CTR = 0

| P3 |
| hist(3) = 0 |

| P4 |
| hist(4) = 0 |

**Fig. 8A**

Logical storage blocks

mapping

Physical storage blocks

| L1 |
| used(1) = TRUE |

→

| P1 stores D1 |
| hist(1) = 2 |

| L2 |
| used(2) = FALSE |

→

| P2 |
| hist(2) = 1 |

CTR = 0

| P3 |
| hist(3) = 0 |

| P4 |
| hist(4) = 0 |

**Fig. 8B**

EP 4 517 569 B1

Logical storage
blocks

mapping

Physical
storage blocks

| L1 |
| used(1) = TRUE |

| L2 |
| used(2) = FALSE |

**CTR = 0**

| P1 stores D1 |
| hist(1) = 2 |

| P2 |
| hist(2) = 1 |

| P3 stores D2 |
| hist(3) = 1 |

| P4 |
| hist(4) = 0 |

## Fig. 8C

Logical storage
blocks

mapping

Physical
storage blocks

| L1 |
| used(1) = TRUE |

| L2 |
| used(2) = FALSE |

**CTR = 0**

| P1 stores D1 |
| hist(1) = 2 |

| P2 |
| hist(2) = 1 |

| P3 stores D2 |
| hist(3) = 1 |

| P4 stores D3 |
| hist(4) = 1 |

## Fig. 8D

Logical storage
blocks

Physical
storage blocks

mapping

| L1 |
| used(1) = TRUE |

| P1 stores D1 |
| hist(1) = 2 |

| L2 |
| used(2) = TRUE |

| P2 stores D4 |
| hist(2) = 2 |

| P3 stores D2 |
| hist(3) = 1 |

**CTR = 0**

| P4 stores D3 |
| hist(4) = 1 |

# Fig. 8E

Logical storage blocks | mapping | Physical storage blocks

| L3<br>used(3) = TRUE | → | P5 stores D5<br>hist(5) = 100 |

| L4<br>used(4) = TRUE | → | P6 stores D6<br>hist(6) = 100 |

P7 stores D7
hist(7) = 100

**CTR = 99**

P8 stores D8
hist(8) = 99

**Fig. 9A**

Logical storage blocks | mapping | Physical storage blocks

| L3<br>used(3) = TRUE | | P5 stores D5<br>hist(5) = 100 |

| L4<br>used(4) = TRUE | → | P6 stores D6<br>Hist(6) = 100 |

P7 stores D7
hist(7) = 100

**CTR = 99**

P8 stores D9
hist(8) = 100

**Fig. 9B**

EP 4 517 569 B1

**Physical storage blocks**

| P5 stores D5<br>hist(5) = 100 |
| P6 stores D6<br>Hist(6) = 100 |
| P7 stores D10<br>hist(7) = 101 |
| P8 stores D11<br>hist(8) = 101 |

mapping

**Logical storage blocks**

| L3<br>used(3) = TRUE |
| L4<br>used(4) = TRUE |

CTR = 100

## Fig. 9D

**Physical storage blocks**

| P5 stores D5<br>hist(5) = 100 |
| P6 stores D6<br>Hist(6) = 100 |
| P7 stores D10<br>hist(7) = 101 |
| P8 stores D9<br>hist(8) = 100 |

mapping

**Logical storage blocks**

| L3<br>used(3) = TRUE |
| L4<br>used(4) = TRUE |

CTR = 100

## Fig. 9C

**S800:** Receive a request from OS to erase data from logical storage block $m$.

**S802:** Determine value of used($m$)

TRUE

FALSE

**S804:** Does physical block $n'$ with hist($n'$) <= CTR exist?

YES

NO

**S806:** Increment loop counter.

**S808:** Update mapping of logical storage block $m$ to physical storage block $n'$.

**S810:** Increase hist($n'$)

**S812:** Set used ($m$) → FALSE

END

# Fig. 10

**S900:** Receive a request from OS to store incoming data in logical storage block $m$.

**S902:** Determine value of used($m$)

TRUE

FALSE

**S912:** Identify physical storage block $n'$ meeting criterion relating to most recent update time.

**S904:** Write data to physical storage block $n$ which is mapped to logical storage block $m$.

**S914:** Update mapping of logical storage block $m$ to physical storage block $n'$.

**S906:** Increment hist($n$) to reflect value of CTR.

**S916:** Increase hist($n'$) to reflect value of CTR

**S908:** Set used($m$) → TRUE

**S918:** Write the data in physical storage block $n'$.

**S910:** Increment value of CTR.

**S920:** Increment value of CTR.

END

Fig. 11

**S1000:** Receive a request from OS to store incoming data in logical storage block $m$.

**S1002:** Determine value of used$(m)$

TRUE

FALSE

**S1004:** Identify physical storage block $n'$ meeting criterion relating to most recent update time.

**S1006:** Update mapping of logical storage block $m$ to physical storage block $n'$.

**S1008:** Increase hist$(n')$ to reflect value of CTR

**S1010:** Set used$(n')$ → FALSE.

**S1012:** Increment value of CTR.

END

Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2021157524 A1

- US 2018189508 A1

### Non-patent literature cited in the description

- FlashGuard Leveraging Intrinsic Flash Properties to Defend Against Encryption Ransomware. **HUANG JIAN JIAN HUANG@GATECH EDU et al.** PROCEEDINGS OF THE 18TH ACM/IFIP/USENIX MIDDLEWARE CONFERENCE. ACMPUB, 30 October 2017, 2231-2244